# EUROPEAN PATENT APPLICATION

(11) **EP 4 447 541 A1**
(43) Date of publication of application: **16.10.2024**
(21) Application number: 22919965.8
(22) Date of filing: 06.12.2022
(51) Int. Cl.: H04W 28/12

(54) **COMMUNICATION METHOD AND SYSTEM**

(30) Priority: 14.01.2022 CN 202210044890; 27.01.2022 CN 202210097563
(71) Applicant: Huawei Technologies Co., Ltd., Shenzhen, Guangdong 518129 (CN)
(72) Inventor: ZHANG, Mengchen, Shenzhen, Guangdong 518129 (CN); XU, Haibo, Shenzhen, Guangdong 518129 (CN); AHLUWALIA, Jagdeep Singh, Shenzhen, Guangdong 518129 (CN); WANG, Yan, Shenzhen, Guangdong 518129 (CN)
(74) Representative: Gill Jennings & Every LLP
(86) International application number: PCT/CN2022/136924
(87) International publication number: WO 2023/134332

(57) **Abstract**

This application relates to a communication method and system. A first network element receives information about downlink data from a second network element, where the downlink data is from a core network device. The first network element is a first DU, and the second network element is a first CU; or the first network element is a first CU-CP, and the second network element is a first CU-UP. If the downlink data meets a downlink small data transmission condition, the first network element sends a paging message that indicates a terminal device to initiate a downlink small data transmission procedure. For example, the first network element is a DU, and the downlink data from the core network device may reach a CU. In this case, the CU may send first information to the DU, so that the DU can determine, based on the first information, whether the downlink data meets the downlink small data transmission condition. That is, this application provides an implementation of a downlink small data transmission mechanism for a new structure of an access network device, so that the downlink small data transmission mechanism can be applied to an evolved network.

## Description

### CROSS-REFERENCE TO RELATED APPLICATIONS

This application claims priorities to Chinese Patent Application No. 202210044890.0, filed with the China National Intellectual Property Administration on January 14, 2022 and entitled "COMMUNICATION METHOD, TERMINAL, AND NETWORK DEVICE", and to Chinese Patent Application No. 202210097563.1, filed with the China National Intellectual Property Administration on January 27, 2022 and entitled "COMMUNICATION METHOD AND SYSTEM", both of which are incorporated herein by reference in their entireties.

### TECHNICAL FIELD

This application relates to the field of communication technologies, and in particular, to a communication method and system.

### BACKGROUND

User equipment (user equipment, UE) in a radio resource control (radio resource control, RRC) inactive (inactive) state does not support data transmission. That is, the UE can perform data transmission only after resuming an RRC connection to enter an RRC connected (connected) state. However, in some scenarios, a data packet that needs to be transmitted by the UE in the RRC inactive state is usually small. That is, the UE needs to transmit only small data (small data), for example, smartphone-related services (such as instant messages, heartbeat packets, or push messages of some applications (APPs)), a non-smartphone-related service (for example, periodic data (such as a heartbeat packet) of a wearable device), or periodic readings (such as readings from a smart meter) sent by an industrial wireless sensor network. In this case, signaling overheads required for the UE to enter the RRC connected state from the RRC inactive state may be even greater than transmission overheads of the small data, thereby resulting in unnecessary power consumption and signaling overheads.

Therefore, a small data transmission (small data transmission, SDT) mechanism may be used, and the UE can transmit the small data without entering the RRC connected state. This reduces the signaling overheads and the power consumption. The small data transmission mechanism is further classified into uplink small data transmission and downlink small data transmission. In a downlink small data transmission procedure, a base station may send downlink small data to the UE before the UE enters the RRC connected state.

### SUMMARY

However, with evolution of technologies, a base station may further include a central unit (central unit, CU) and a distributed unit (distributed unit, DU). How to send downlink small data to UE in such a structure of the base station is not discussed currently.

Embodiments of this application provide a communication method and system, to provide a manner of sending downlink small data to a terminal device.

According to a first aspect, a first communication method is provided. The method may be executed by a first network element, may be executed by a device that includes a function of the first network element, or may be executed by a chip system or a functional module. The chip system or the functional module can implement the function of the first network element. For example, the chip system or the functional module is disposed in the first network element. Optionally, the first network element is, for example, a DU; or the first network element is, for example, a CU-control plane (control plane, CP). The method includes: The first network element receives first information from a second network element, where the first information includes information about downlink data, and the downlink data is from a core network device; and the first network element is a first DU, and the second network element is a first CU; or the first network element is a first CU-CP, and the second network element is a first CU-user plane (user plane, UP); and if the downlink data meets a downlink small data transmission condition, the first network element sends a paging message, where the paging message indicates a terminal device to initiate a downlink small data transmission procedure.

In this embodiment of this application, the first network element may receive the first information from the second network element, and the first information may include the information about the downlink data. In this case, the first network element can determine, based on the information about the downlink data, whether the downlink small data transmission condition is met. If the downlink small data transmission condition is met, the first network element may send the paging message, to indicate the terminal device to initiate the downlink small data transmission procedure. For example, if the first network element is a DU, and the downlink data from the core network may arrive at a CU, the CU may send the first information to the DU, so that the DU can determine, based on the first information, whether the downlink data meets the downlink small data transmission condition. Alternatively, the first network element is a CU-CP, and the downlink data from the core network may reach a CU-UP. In this case, the CU-UP may send the first information to the CU-CP, so that the CU-CP can determine, based on the first information, whether the downlink data meets the downlink small data transmission condition. That is, embodiments of this application provide an implementation of a downlink small data transmission mechanism for a new structure of an access network device.

According to the first aspect, the first network element is the first DU, and the method further includes: A first CU-CP receives fourth information from a first CU-UP, where the fourth information includes the information about the downlink data, and the downlink data is from the core network device; and the first CU-CP sends the first information to the first DU. The downlink data from the core network may arrive at a CU-UP. If the first network element is a DU, the CU-UP may directly send the first information to the DU, or the CU-UP may send fourth information to a CU-CP, the CU-CP may obtain the first information based on the fourth information, and the CU-CP then sends the first information to the DU.

According to the first aspect or any implementation of the first aspect, the first information includes one or more of the following: a size of the downlink data; a size relationship between a size of the downlink data and a first threshold; or capability information of a terminal device configured to receive the downlink data, where the capability information indicates whether the terminal device supports downlink small data transmission. For example, the first information may indicate the size of the downlink data. In this case, the first network element can determine, based on the size of the downlink data, whether the downlink data meets a downlink transmission condition. Alternatively, the first information may indicate the size relationship between the size of the downlink data and the first threshold. In this case, the first network element can directly determine, based on the first information, whether the downlink data meets the downlink transmission condition without excessive determining, thereby reducing a workload of the first network element. Optionally, the first information may further indicate the capability of the terminal device configured to receive the downlink data. In this case, the first network element can also use the capability of the terminal device as a determining basis, so that the first network element determines more accurately whether downlink small data transmission can be performed.

According to the first aspect or any implementation of the first aspect, if the first information includes the size of the downlink data, the first information indicates that the terminal device supports downlink small data transmission. For example, the first information may not include the capability information of the terminal device, but may indicate a capability of the terminal device in an implicit manner. For example, if the terminal device does not support downlink small data transmission, the second network element may not send the first information to the first network element; or if the terminal device supports downlink small data transmission, the second network element may send the first information to the first network element. That the second network element sends the first information is equivalent to implicitly indicating that the terminal device supports downlink small data transmission. Transmission overheads can be reduced in this manner.

According to the first aspect or any implementation of the first aspect, if the first information does not include the capability information, the method further includes: The first network element receives the capability information. For example, if the first information does not include the capability information of the terminal device, and the first information does not indicate the capability of the terminal device in an implicit manner (for example, in an explicit manner), the second network element may further send the capability information to the first network element, so that the first network element can use the capability information as a determining basis.

According to the first aspect or any implementation of the first aspect, the method further includes: If the size of the downlink data is less than or equal to the first threshold, the first network element determines that the downlink data meets the downlink small data transmission condition, where the information about the downlink data includes the size of the downlink data; or if the information about the downlink data indicates that the size of the downlink data is less than or equal to the first threshold, the first network element determines that the downlink data meets the downlink small data transmission condition, where the information about the downlink data indicates the size relationship between the size of the downlink data and the first threshold. The first network element may determine, based on the information that is about the downlink data and that is included in the first information, whether the downlink data meets the downlink small data transmission condition. For example, the information about the downlink data directly includes the size of the downlink data. In this case, the first network element may determine the size relationship between the size of the downlink data and the first threshold. If the size of the downlink data is less than or equal to the first threshold, the downlink data meets the downlink small data transmission condition. If the size of the downlink data is greater than the first threshold, the downlink data does not meet the downlink small data transmission condition. In this manner, the first information may include the size of the downlink data. In this case, the first network element can perform correct determining even when the first threshold changes, thereby improving accuracy of a determining result. Alternatively, the information about the downlink data includes the size relationship between the size of the downlink data and the first threshold. In this case, the first network element can directly determine, based on the information about the downlink data, whether the downlink data meets the downlink small data transmission condition without a further determining process, thereby simplifying steps performed by the first network element, simplifying implementation of the first network element, and reducing power consumption of the first network element.

According to the first aspect or any implementation of the first aspect, when the information about the downlink data includes the size of the downlink data, and if the size of the downlink data is less than or equal to the first threshold, the first network element may determine, in the following manner, that the downlink data meets the downlink small data transmission condition: If the size of the downlink data is less than or equal to the first threshold, and the terminal device supports downlink small data transmission, the first network element determines that the downlink data meets the downlink small data transmission condition.

According to the first aspect or any implementation of the first aspect, when the information about the downlink data indicates the size relationship between the size of the downlink data and the first threshold, and if the information about the downlink data indicates that the size of the downlink data is less than or equal to the first threshold, the first network element may determine, in the following manner, that the downlink data meets the downlink small data transmission condition: If the information about the downlink data indicates that the size of the downlink data is less than or equal to the first threshold, and the terminal device supports downlink small data transmission, the first network element determines that the downlink data meets the downlink small data transmission condition.

It can be learned from the foregoing two implementations that the first network element may further determine, with reference to the capability information of the terminal device, whether the downlink data meets the downlink small data transmission condition when determining whether the downlink data meets the downlink small data transmission condition. For example, if the capability of the terminal device does not support downlink small data transmission, the first network element may determine that the downlink data does not meet the downlink small data transmission condition. In this way, a decision of the first access network device may be consistent with the capability of the terminal device. This avoids that the terminal device cannot execute an indication of the first access network device because the capability of the terminal device does not support downlink small data transmission.

According to the first aspect or any implementation of the first aspect, the paging message includes downlink small data transmission indication information. The paging message sent by the first network element may include a downlink small data transmission indication, so that a network element (for example, a DU or a terminal device) that receives the paging message can determine that the paging message is used to initiate downlink small data transmission.

According to the first aspect or any implementation of the first aspect, the method further includes: The first network element sends second information to a third network element, where the second information indicates that the third network element needs to reply, to the first network element, a response to the paging message, and the third network element is one of network elements that receive the paging message; and the first network element receives third information from the third network element, where the third information indicates to determine to initiate the downlink small data transmission procedure, and the third information is the response to the paging message. For example, the first network element is a CU-CP, and the CU-CP may be connected to a plurality of DUs. Therefore, after the CU-CP sends the paging message, the plurality of DUs may all receive the paging message. If all the DUs send responses to the paging message to the CU-CP, the CU-CP needs to receive too many messages, and power consumption is high. Therefore, the CU-CP may send the second information to one of the DUs (for example, the third network element), to indicate the DU to send, to the CU-CP, a response to the paging message, and the DU only needs to send, to the CU-CP, the response to the paging message. A DU that does not receive the second information may not send, to the CU-CP, a response to the paging message. In this way, an amount of information received by the CU-CP can be reduced, and power consumption can be reduced.

According to the first aspect or any implementation of the first aspect, the first network element is the first CU, and the method further includes: The first network element sends the first information to a second CU, where the first CU is an anchor network element of the terminal device, and the second CU is a network element on which the terminal device currently camps. For example, an access network device corresponding to the first CU is an anchor access network device of the terminal device, and the terminal device may not currently camp on the access network device. Therefore, the first CU needs to send the first information to another CU (for example, the second CU), so that an access network device on which the terminal device camps can obtain the first information, and the terminal device can initiate downlink small data transmission under the access network device.

According to a second aspect, a second communication method is provided. The method may be performed by a first access network device, may be performed by another device that includes a function of the first access network device, or may be performed by a chip system or another functional module. The chip system or the functional module can implement the function of the first access network device, and the chip system or the functional module is, for example, disposed in the first access network device. Optionally, the first access network device is, for example, a base station. The method includes: receiving an RRC request message from a terminal device; determining, based on the RRC request message, that the terminal device requests downlink small data transmission; and sending fifth information to a second access network device, where the fifth information includes information related to downlink small data transmission. The first access network device is an access network device on which the terminal device currently camps, and the second access network device is an anchor access network device of the terminal device.

In this embodiment of this application, the second access network device can obtain the fifth information. Therefore, when determining whether to perform anchor relocation, the second access network device may use the fifth information as a reference factor. In this way, the second access network device can make a more reasonable decision, and transmission overheads are reduced.

According to the second aspect, before the receiving an RRC request message from a terminal device, the method further includes: receiving sixth information from the second access network device, where the sixth information includes a size of downlink data; and sending a paging message, where the paging message includes downlink small data transmission indication information. Information related to downlink small data transmission includes information indicating that a downlink small data transmission procedure has been initiated. For example, the second access network device is an anchor access network device of the terminal device, and the first access network device is an access network device on which the terminal device currently camps. If the downlink data to be sent to the terminal device may arrive at the second access network device first, the second access network device may indicate the first access network device to initiate the downlink small data transmission procedure. After receiving the indication (for example, the sixth information), for example, the first access network device determines, based on the size of the downlink data, that the downlink small data transmission procedure can be initiated, and the first access network device may send the paging message, to indicate the terminal device to initiate the downlink small data transmission procedure.

According to the second aspect or any implementation of the second aspect, the determining, based on the RRC request message, that the terminal device requests downlink small data transmission includes: determining, based on the downlink small data transmission indication information included in the paging message, that the terminal device requests downlink small data transmission. The paging message sent by the first access network device may include the downlink small data transmission indication information. Therefore, the first access network device can explicitly indicate the terminal device to initiate the downlink small data transmission procedure. In this case, if the first access network device receives the RRC request message from the terminal device after the first access network device sends the paging message, the first access network device may determine, based on the downlink small data transmission indication information included in the paging message, that the RRC request message is used for downlink small data transmission.

According to the second aspect or any implementation of the second aspect, the information related to downlink small data transmission includes a second threshold, where the second threshold is used by the second access network device to determine whether the first access network device can initiate the downlink small data transmission procedure. For example, the second access network device indicates the first access network device to initiate the downlink small data transmission procedure, but the second access network device may not send the size of the downlink data to the first access network device. Different access network devices may have different determining thresholds for initiating downlink small data transmission. The size of the downlink data can be used by the second access network device to initiate the downlink small data transmission procedure, but may not be used by the first access network device to initiate the downlink small data transmission procedure. If the first access network device does not know the size of the downlink data, the first access network device may send the second threshold to the second access network device, so that the second access network device can use the second threshold and the size of the downlink data, to determine whether the first access network device can initiate the downlink small data transmission procedure.

According to the second aspect or any implementation of the second aspect, the second threshold is set by the first access network device; or the second threshold is received by the first access network device from a third access network device. For example, the second threshold is set by the first access network device, is set by a core network device, or may be sent by the third access network device to the first access network device. The third access network device and the second access network device may be a same access network device, or may be different access network devices.

According to the second aspect or any implementation of the second aspect, the method further includes: receiving seventh information from the second access network device, where the seventh information indicates a size relationship between the size of downlink data to be sent to the terminal device and the second threshold, or indicates whether to initiate the downlink small data transmission procedure. After obtaining the second threshold, the second access network device may determine, based on the second threshold and the size of the downlink data, whether the first access network device can initiate the downlink small data transmission procedure, so that the second access network device may indicate, based on the seventh information, the first access network device to initiate the downlink small data transmission procedure, or indicate the first access network device not to initiate the downlink small data transmission procedure. Alternatively, the second access network device may send the size relationship between the second threshold and the size of the downlink data to the first access network device, and the first access network device can also determine, based on the size relationship, whether to initiate the downlink small data transmission procedure. For example, if the size of the downlink data is less than or equal to the second threshold, the first access network device can initiate the downlink small data transmission procedure, or if the size of the downlink data is greater than the second threshold, the first access network device cannot initiate the downlink small data transmission procedure.

According to the second aspect or any implementation of the second aspect, the determining, based on the RRC request message, that the terminal device requests downlink small data transmission includes: determining, based on cause information included in the RRC request message, that the terminal device requests downlink small data transmission; and/or determining, based on a resource used to receive the RRC request message, that the terminal device requests downlink small data transmission. For example, the RRC request message may include the cause information, and a value of the cause information may indicate that the terminal device requests downlink small data transmission, or indicate downlink small data. In this case, the first access network device can determine, based on the cause information included in the RRC request message, that the terminal device requests downlink small data transmission. For example, if the terminal device sends the RRC request message by using a preconfigured resource, the first access network device can also determine, based on the resource for receiving the RRC request message, that the terminal device requests downlink small data transmission.

According to the second aspect or any implementation of the second aspect, the method further includes: receiving a random access preamble from the terminal device. For example, the terminal device may restore an RRC connection through a random access process. Therefore, before sending the RRC request message to the first access network device, the terminal device may first send the random access preamble to the first access network device. Alternatively, in a two-step random access process, it may be considered that the terminal device sends both the RRC request message and the random access preamble to the first access network device.

According to the second aspect or any implementation of the second aspect, the determining, based on the RRC request message, that the terminal device requests downlink small data transmission includes: determining, based on the random access preamble, that the terminal device requests downlink small data transmission; and/or determining, based on a resource used for receiving the random access preamble, that the RRC request message is used for downlink small data transmission. For example, if the random access preamble is a random access preamble dedicated to small data transmission (for example, downlink small data transmission), the first access network device can determine, based on the random access preamble, that the terminal device requests downlink small data transmission. For another example, if a resource used by the terminal device to send the random access preamble is a preconfigured resource, the first access network device can determine, based on the resource for receiving the random access preamble, that the terminal device requests downlink small data transmission.

According to the second aspect or any implementation of the second aspect, the method further includes: receiving a full context of the terminal device or a partial context of the terminal device from the second access network device. The second access network device needs to send the context of the terminal device to the first access network device, so that the terminal device and the first access network device can perform the downlink small data transmission procedure.

According to the second aspect or any implementation of the second aspect, the method further includes: determining, based on an event of the partial context that is of the terminal device and that is received from the second access network device, to initiate the downlink small data transmission procedure; and determining, based on an event of the full context that is of the terminal device and that is received from the second access network device, to enable the terminal device to enter an RRC connected state. For example, if the second access network device sends the partial context of the terminal device to the first access network device, it is equivalent to implicitly indicating to initiate the downlink small data transmission procedure. However, if the second access network device sends the full context of the terminal device to the first access network device, it is equivalent to implicitly indicating not to initiate the downlink small data transmission procedure. In this manner, the second access network device does not need to send other information to indicate whether to initiate the downlink small data transmission procedure, thereby reducing transmission overheads.

According to a third aspect, a third communication method is provided. The method may be performed by a second access network device, may be performed by another device that includes a function of the second access network device, or may be performed by a chip system or another functional module. The chip system or the functional module can implement the function of the second access network device, and the chip system or the functional module is, for example, disposed in the second access network device. Optionally, the second access network device is, for example, a base station. The method includes: receiving fifth information from a first access network device, where the fifth information includes information related to downlink small data transmission, the first access network device is an access network device on which a terminal device currently camps, and the second access network device is an anchor access network device of the terminal device.

According to the third aspect, the information related to downlink small data transmission includes information indicating that a downlink small data transmission procedure has been initiated; or the information related to the downlink small data transmission includes a second threshold, where the second threshold is used by the second access network device to determine whether the first access network device can initiate the downlink small data transmission procedure.

According to the third aspect or any implementation of the third aspect, the method further includes: sending seventh information to the first access network device, where the seventh information indicates a size relationship between a size of downlink data to be sent to the terminal device and the second threshold, or indicates whether to initiate the downlink small data transmission procedure.

According to the third aspect or any implementation of the third aspect, the method further includes: sending, based on the fifth information, a full context or a partial context of the terminal device to the first access network device.

According to the third aspect or any implementation of the third aspect, the partial context of the terminal device is sent to the first access network device, to indicate to initiate the small data transmission procedure; or the full context of the terminal device is sent to the first access network device, to indicate the terminal device to enter the RRC connected state.

For technical effects brought by the third aspect or the optional implementations, refer to the descriptions of the technical effects brought by the second aspect or the corresponding implementations.

According to a fourth aspect, a fourth communication method is provided. The method may be performed by a terminal device, may be performed by another device that includes a function of the terminal device, or may be performed by a chip system or another functional module. The chip system or the functional module can implement the function of the terminal device, and the chip system or the functional module is, for example, disposed in the terminal device. The method includes: receiving a paging message; and sending an RRC request message to a first access network device, where the RRC request message includes cause information, and the cause information indicates that a terminal device requests downlink small data transmission.

According to the fourth aspect, the paging message includes downlink small data transmission indication information.

For technical effects brought by the fourth aspect or the optional implementations, refer to description of the technical effects brought by the second aspect or the corresponding implementations.

According to a fifth aspect, a first communication system is provided. The first communication system may perform the method in the first aspect. The first communication system includes a first network element and a second network element. For example, the first network element is a DU, and the second network element is a CU. Alternatively, the first network element is a CU-CP, and the second network element is a CU-UP. Alternatively, the first network element is a DU, and the second network element is a CU-CP or a CU-UP.

Optionally, the second network element is configured to send first information to the first network element, where the first information includes information about downlink data, and the downlink data is from a core network device. The first network element is a first DU, and the second network element is a first CU; or the first network element is a first CU-CP, and the second network element is a first CU-UP. The first network element is configured to receive the first information from the second network element. The first network element is further configured to send a paging message if the downlink data meets a downlink small data transmission condition, where the paging message indicates a terminal device to initiate a downlink small data transmission procedure.

For technical effects brought by the fifth aspect or the optional implementations, refer to descriptions of the technical effects brought by the first aspect or the corresponding implementations.

According to a sixth aspect, a communication apparatus is provided. The communication apparatus may be the access network device according to any one of the second aspect to the fourth aspect and the implementations thereof. The communication apparatus has a function of the access network device. The communication apparatus is, for example, the access network device, or a functional module in the access network device, for example, a baseband apparatus or a chip system. The access network device is, for example, a first access network device or a second access network device. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules.

When the communication apparatus has a function of the first access network device in any one of the second aspect to the fourth aspect and the implementations thereof, optionally, the transceiver unit is configured to receive an RRC request message from a terminal device; the processing unit is configured to determine, based on the RRC request message, that the terminal device requests downlink small data transmission; and the transceiver unit is further configured to send fifth information to a second access network device, where the fifth information includes information related to downlink small data transmission, the first access network device is an access network device on which the terminal device currently camps, and the second access network device is an anchor access network device of the terminal device.

When the communication apparatus has a function of the second access network device in any one of the second aspect to the fourth aspect and the implementations thereof, optionally, the transceiver unit is configured to receive fifth information from a first access network device, where the fifth information includes information related to downlink small data transmission; and the first access network device is an access network device on which a terminal device currently camps, and the second access network device is an anchor access network device of the terminal device.

In an optional implementation, the communication apparatus further includes a storage unit. The processing unit is coupled to the storage unit, and executes a program or instructions in the storage unit, to enable the communication apparatus to perform a function of the first access network device or the second access network device according to any one of the second aspect to the fourth aspect and the implementations thereof.

According to a seventh aspect, a communication apparatus is provided. The communication apparatus may be the terminal device according to any one of the second aspect to the fourth aspect and the implementations thereof. The communication apparatus has a function of the terminal device. The communication apparatus is, for example, the terminal device, or a functional module in the terminal device, for example, a baseband apparatus or a chip system. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the description of the fifth aspect.

Optionally, the transceiver unit is configured to receive a paging message; and the transceiver unit is further configured to send an RRC request message to a first access network device, where the RRC request message includes cause information, and the cause information indicates that a terminal device requests downlink small data transmission.

In an optional implementation, the communication apparatus further includes a storage unit. The processing unit is coupled to the storage unit, and executes a program or instructions in the storage unit, to enable the communication apparatus to perform a function of the terminal device in any one of the second aspect to the fourth aspect.

According to an eighth aspect, a computer-readable storage medium is provided. The computer-readable storage medium stores a computer program or instructions. When the computer program or the instructions are run, the method performed by the first communication system, the terminal device, the first access network device, or the second access network device in any one of the foregoing aspects and the implementations thereof is implemented.

According to a ninth aspect, a computer program product including instructions is provided. When the computer program product runs on a computer, the method in any one of the foregoing aspects and the implementations thereof is implemented.

According to a tenth aspect, an apparatus is provided, including one or more units configured to perform the method in any one of the foregoing aspects of this application and the implementations thereof.

### BRIEF DESCRIPTION OF DRAWINGS

FIG. 1 is a diagram of switching between several RRC states of UE;
FIG. 2 is a flowchart of an anchor relocation process;
FIG. 3 is a flowchart in which an anchor relocation process is not performed;
FIG. 4 is a diagram of a network architecture to which an embodiment of this application is applied;
FIG. 5 is a diagram of a structure of an access network device according to an embodiment of this application;
FIG. 6 is a diagram of another structure of an access network device according to an embodiment of this application;
FIG. 7 is a flowchart of a communication method according to an embodiment of this application;
FIG. 8 is a flowchart of an implementation of the communication method provided in FIG. 7;
FIG. 9 is a flowchart of another implementation of the communication method provided in FIG. 7;
FIG. 10 is a diagram of a network architecture to which an embodiment of this application is applied;
FIG. 11 is a flowchart of a communication method according to an embodiment of this application;
FIG. 12 is a flowchart of another communication method according to an embodiment of this application;
FIG. 13 is a diagram of an apparatus according to an embodiment of this application; and
FIG. 14 is a diagram of another apparatus according to an embodiment of this application.

### DESCRIPTION OF EMBODIMENTS

To make objectives, technical solution, and advantages of embodiments of this application clearer, the following further describes embodiments of this application in detail with reference to accompanying drawings.

In embodiments of this application, unless otherwise specified, a quantity of nouns indicates "a singular noun or a plural noun", that is, "one or more". "At least one" means one or more, and "a plurality of" means two or more. The term "and/or" describes an association relationship between associated objects and indicates that three relationships may exist. For example, A and/or B may indicate the following three cases: Only A exists, both A and B exist, and only B exists. A and B may be singular or plural. The character "/" usually indicates an "or" relationship between the associated objects. For example, A/B indicates A or B. "At least one of the following items (pieces)" or a similar expression thereof means any combination of these items, including a singular item (piece) or any combination of a plurality of items (pieces). For example, at least one item (piece) of a, b, or c may represent: a, b, c, a and b, a and c, b and c, or a, b, and c, where a, b, and c may be singular or plural.

Ordinal numerals such as "first" and "second" mentioned in embodiments of this application are used to distinguish between a plurality of objects, and are not intended to limit sizes, content, a sequence, a time sequence, priorities, importance, or the like of the plurality of objects. For example, first information and second information may be same or different information. In addition, the names do not indicate that content, sizes, application scenarios, transmit ends/receive ends, priorities, importance, or the like of the two pieces of information are different. In addition, step numbers in embodiments described in this application are merely used to distinguish between different steps, but are not used to limit a sequence of the steps. For example, S701 may be performed before S702, S701 may be performed after S702, or S701 and S702 may be performed at the same time.

The following describes some terms or concepts in embodiments of this application, to facilitate understanding by persons skilled in the art.
(1) In embodiments of this application, a terminal device is a device with a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing devices. The terminal device is configured to connect a person, an object, a machine, and the like, and may be widely used in various scenarios. For example, the terminal device includes but is not limited to a terminal device used in the following scenarios: cellular communication, device-to-device (device-to-device, D2D) communication, vehicle to everything (vehicle to everything, V2X), machine-to-machine/machine-type communication (machine-to-machine/machine-type communication, M2M/MTC), an internet of things (internet of things, IoT), virtual reality (virtual reality, VR), augmented reality (augmented reality, AR), industrial control (industrial control), self driving (self driving), telemedicine (remote medical), a smart grid (smart grid), smart furniture, smart office, a smart wearable, smart transportation, a smart city (smart city), an uncrewed aerial vehicle, and a robot. The terminal device may be sometimes referred to as user equipment (user equipment, UE), a terminal, an access station, a UE station, a remote station, a wireless communication device, a user apparatus, or the like. For ease of description, in embodiments of this application, an example in which the terminal device is UE is used for description.
(2) In embodiments of this application, a network device may include, for example, an access network device and/or a core network device. The access network device is a device with a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), a base station evolved from the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks of a same access technology, or may support networks of different access technologies. The base station may include one or more co-site or non-co-site transmission reception points. Alternatively, the access network device may be a radio controller, a central unit (central unit, CU), and/or a distributed unit (distributed unit, DU) in a cloud radio access network (cloud radio access network, CRAN) scenario. Alternatively, the access network device may be a server or the like. For example, a network device in the vehicle-to-everything (vehicle to everything, V2X) technology may be a road side unit (road side unit, RSU). The following uses an example in which the access network device is a base station for description. The base station may communicate with the terminal device, or may communicate with the terminal device through a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support a network device in implementing the function. The apparatus may be installed in the network device. In technical solutions provided in embodiments of this application, an example in which an apparatus configured to implement a function of a network device is a network device is used for describing the technical solutions provided in embodiments of this application.

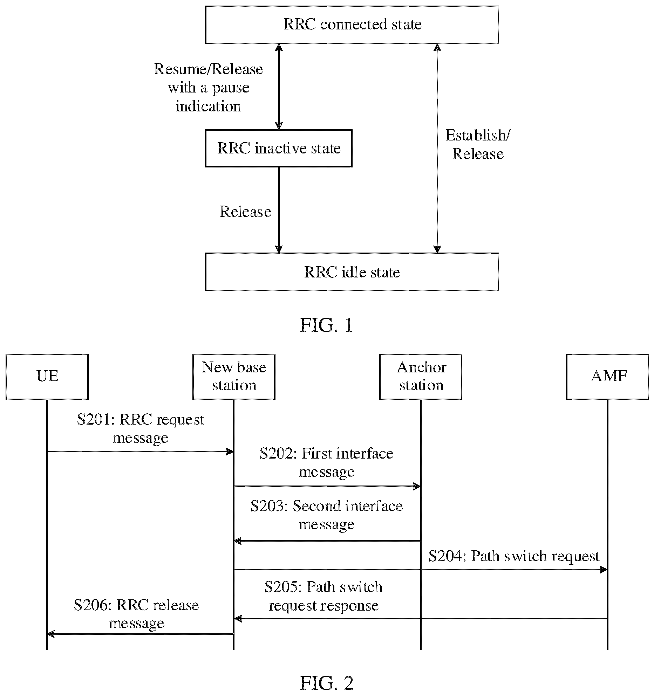

(3) Currently, UE has three RRC states in total: an RRC idle (idle) state, an RRC inactive state, and an RRC connected (connected) state. If the UE has established an RRC connection, the UE is in the RRC connected state or the RRC inactive state. If the UE has not established an RRC connection, the UE is in the RRC idle state. The RRC inactive state is introduced for UE in 5G NR, and this RRC state is mainly for a case in which "UE that infrequently (infrequent) transmits data is usually kept in the RRC inactive state by a network". When the UE is in different RRC states, different operations are performed. For example, FIG. 1 is a diagram of switching between three RRC states. When the UE is in the RRC idle state, if the UE needs to transmit data, the UE may initiate an RRC connection establishment process to enter the RRC connected state. If the UE is in the RRC connected state and does not need to transmit data, a base station may release the UE, so that the UE enters the RRC idle state or the RRC inactive state. If the base station sends a release (release) message with a pause indication, for example, an RRC release message with a suspend indication (RRC release with suspend indication), the UE enters the RRC inactive state. If the base station sends a release message, for example, an RRC release message, the UE enters the RRC idle state. In addition, the UE in the RRC inactive state may alternatively return to the RRC connected state through an RRC connection resume (resume) process, or the base station may release the UE in the RRC inactive state to the RRC idle state.

### (4) Anchor base station

When UE moves to a cell, the UE in an RRC inactive state initiates a small data transmission procedure when the UE has an SDT requirement. When the UE initiates the small data transmission procedure, because a serving gNB corresponding to a current serving cell may not have a context of the UE, the context of the UE is stored in an anchor gNB. The anchor gNB may be understood as a network node/base station/network device, and is also referred to as a last serving gNB (last serving gNB), a previous serving base station, an anchor gNB (anchor gNB), or an old gNB (old gNB). The anchor gNB may maintain contexts of one or more UEs in an RRC inactive state, or store a PDCP context or function (such as encryption and integrity protection) of UE. Alternatively, the anchor gNB is a base station to which the UE is connected when the UE is in an RRC connected state last time, or a gNB to which the UE is connected when the UE is in an RRC connected state last time and that sends an RRC release (RRC release) message to the UE. In addition to the anchor gNB, another gNB on which the UE camps may serve as a serving gNB of the UE, and the serving gNB may not have a context of UE that is in an RRC inactive state and that operates within a coverage area of the serving gNB. The serving gNB may also be referred to as a new serving gNB (new serving gNB)/current serving gNB (current serving gNB)/new gNB (new gNB).

For example, a gNB₁ is an anchor gNB of the UE. However, when the UE moves out of a coverage area of the gNB₁ and enters a coverage area of a gNB₂, if the gNB₁ does not send a context of the UE to the gNB₂, the gNB₂ is a serving gNB of the UE. Similarly, when the UE continues to move, moves out of the coverage area of the gNB₂ and enters a coverage are of a gNB₃, if the gNB₁ does not send the context of the UE to the gNB₃, the gNB₃ is a serving gNB of the UE, and the gNB₁ is still an anchor gNB of the UE. That is, when the UE initiates transmission in a new gNB, if the anchor gNB sends the context of the UE to the new gNB, the new gNB becomes an anchor gNB of the UE. If the anchor gNB does not send the context of the UE to a new base station, the anchor gNB remains unchanged. If the anchor gNB sends the context of the UE to the new gNB, an anchor relocation (anchor relocation) process may be performed between the new gNB and the anchor gNB. For example, FIG. 2 is a flowchart of the anchor relocation process. In FIG. 2, the new gNB is referred to as a new base station, and the anchor gNB is referred to as an anchor station.

S201: The UE sends an RRC request message to the new base station. Correspondingly, the new base station receives the RRC request message from the UE. The RRC request message is, for example, an RRC resume request (RRC resume request) message, or the RRC resume request message may also be briefly referred to as an RRC resume request. The RRC resume request may be used to request to resume an RRC connection, and an objective of resuming the RRC connection is to perform small data transmission.

S202: The new base station sends a first interface message to the anchor station. Correspondingly, the anchor station receives the first interface message from the new base station. The first interface message is, for example, an Xn interface message, and the Xn interface message is, for example, a retrieve UE context request (retrieve UE context request) message. For example, the new base station may send the first interface message to the anchor station through an Xn interface between the new base station and the anchor station. In some embodiments, the first interface message is used to request to retrieve the context of the UE.

For example, the new base station may learn of information about the anchor station of the UE based on an inactive temporary cell radio network temporary identifier (inactive temporary cell radio network temporary identifier, I-RNTI) carried in the RRC resume request.

S203: The anchor station sends a second interface message to the new base station. Correspondingly, the new base station receives the second interface message from the anchor station. The second interface message is, for example, an Xn interface message, and the Xn interface message is, for example, a retrieve UE context response (retrieve UE context response) message or a retrieve UE context failure (retrieve UE context failure) message. For example, if the anchor station determines to perform anchor relocation, the anchor station may send the full context of the UE based on the second interface message.

S204: The new base station sends a path switch request (path switch request) to an AMF. Correspondingly, the AMF receives the path switch request from the new base station. The path switch request is used to request to switch a path of the UE.

S205: The AMF sends a path switch request response (path switch request response) to the new base station. Correspondingly, the new base station receives the path switch request response from the AMF. In this way, path switching of the UE is completed, and the new base station becomes a new anchor station of the UE. If downlink small data of the UE arrives subsequently, a core network sends the downlink small data to the new base station instead of an original anchor station. However, if the UE has to-be-sent uplink small data, the UE may send the to-be-sent uplink small data to the new base station, and the new base station does not need to forward the data to the original anchor station.

S206: The new base station (namely, a current anchor station) sends an RRC release message to the UE. Correspondingly, the UE receives the RRC release message from the new base station.

For example, when determining that the UE has no SDT data transmission requirement, the new base station may send the RRC release message to the UE, to end a current SDT procedure.

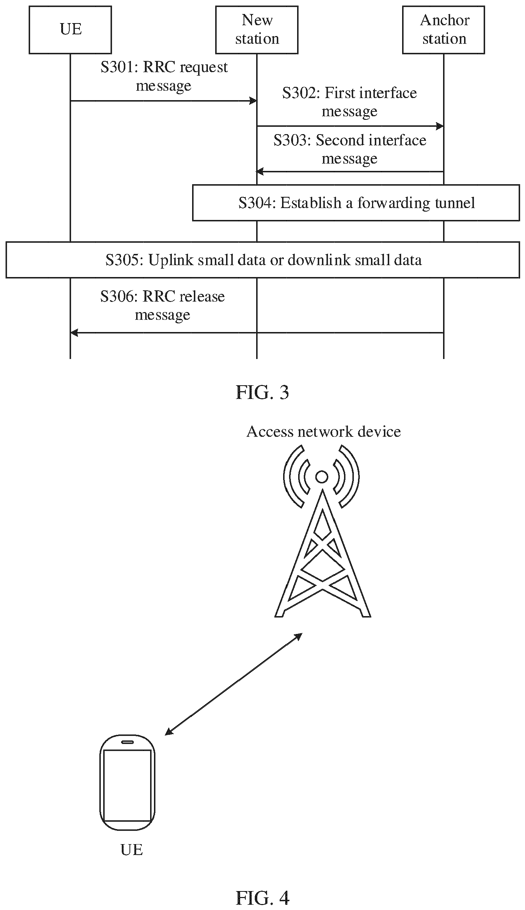

For example, FIG. 3 is a flowchart in which after the UE initiates SDT, the anchor station determines not to perform anchor relocation.

S301: The UE sends an RRC request message to the new base station. Correspondingly, the new base station receives the RRC request message from the UE. For example, the RRC request message is an RRC resume request. The RRC resume request is used to request to resume an RRC connection, and an objective of resuming the RRC connection is to perform small data transmission.

S302: The new base station sends a first interface message to the anchor station. Correspondingly, the anchor station receives the first interface message from the new base station. The first interface message is, for example, an Xn interface message, and the Xn interface message is, for example, a retrieve UE context request message. In some embodiments, the first interface message is used to request to retrieve the context of the UE. For example, the new base station may send the first interface message to the anchor station through an Xn interface between the new base station and the anchor station.

For example, the new base station may learn of information about the anchor station of the UE based on an I-RNTI carried in the RRC resume request.

S303: The anchor station sends a second interface message to the new base station. Correspondingly, the new base station receives the second interface message from the anchor station. The second interface message is, for example, an Xn interface message, and the Xn interface message is, for example, a retrieve UE context response message or a retrieve UE context failure message. For example, if the anchor station determines not to perform anchor relocation, the anchor station may send an RLC layer context of the UE based on the second interface message.

S304: Establish a forwarding tunnel (forwarding tunnel establishment) between the new base station and the anchor station.

S305: The UE performs small data transmission with the anchor station.

If the UE initiates an uplink SDT process, the new base station may forward, to the anchor station, uplink small data from the UE. If the UE initiates a downlink SDT process, the new base station may forward, to the UE, downlink small data from the anchor station.

S306: The anchor station sends an RRC release message to the UE. The RRC release message may be forwarded to the UE through the new base station, and the UE receives the RRC release message from the new base station.

For example, when determining that the UE has no SDT data transmission requirement, the anchor station may send the RRC release message to the UE through the new base station, to end a current SDT procedure.

In embodiments of this application, a first network element may receive first information from a second network element, and the first information may include information about downlink data. In this case, the first network element can determine, based on the information about the downlink data, whether a downlink small data transmission condition is met. If the downlink small data transmission condition is met, the first network element may send a paging message, to indicate UE to initiate a downlink small data transmission procedure. For example, the first network element is a DU, and the downlink data from a core network device may reach a CU. In this case, the CU may send the first information to the DU, so that the DU can determine, based on the first information, whether the downlink data meets the downlink small data transmission condition. That is, embodiments of this application provide an implementation of a downlink small data transmission mechanism for a new structure of an access network device.

The technical solutions provided in embodiments of this application may be applied to a 4th generation mobile communication technology (the 4th generation, 4G) system, for example, a long term evolution (long term evolution, LTE) system, may be applied to a 5G system, for example, a new radio (new radio, NR) system, or may be applied to a next-generation mobile communication system or another similar communication system. This is not specifically limited. In addition, the technical solutions provided in embodiments of this application may be applied to a device-to-device (device-to-device, D2D) scenario, for example, an NR-D2D scenario, or may be applied to a vehicle-to-everything (vehicle to everything, V2X) scenario, for example, an NR-V2X scenario. For example, the technical solutions provided in embodiments of this application may be applied to the internet of vehicles, for example, V2X or vehicle-to-vehicle (vehicle-to-vehicle, V2V), or may be applied to fields such as intelligent driving, assisted driving, or an intelligent connected vehicle. If the technical solutions provided in embodiments of this application are applied to the D2D scenario, both communication parties may be UEs. If the technical solutions provided in embodiments of this application are applied to a non-D2D scenario, one communication party may be UE, and the other communication party may be a network device (for example, an access network device), or both communication parties may be network devices. In the following description process, an example in which both communication parties are UE and an access network device respectively is used.

For example, FIG. 4 shows a communication network architecture according to an embodiment of this application. Embodiments provided subsequently are applicable to this architecture. An access network device can communicate with UE. For descriptions of the access network device and the UE, refer to the foregoing descriptions.

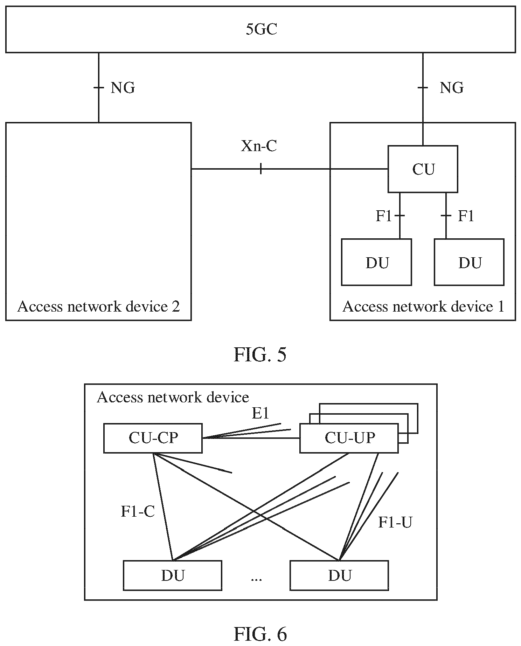

For example, FIG. 5 is a diagram of a structure of an access network device. It can be learned from FIG. 5 that the access network device (for example, a base station) may further include a CU and a DU, and one CU may be connected to one or more DUs. For example, if the access network device is a gNB, the gNB may further include a gNB-CU and a gNB-DU. The gNB-CU includes at least one of the following logical nodes: RRC, a service data adaptation protocol (service data adaptation protocol, SDAP), and a packet data convergence protocol (packet data convergence protocol, PDCP). The gNB-DU includes at least one of the following logical nodes: radio link control (radio link control, RLC), media access control (media access control, MAC), and a physical layer (PHY). An interface between the gNB-CU and the gNB-DU is an F1 interface. In FIG. 5, an example in which an access network device 1 is further divided and an access network device 2 is a whole is used. NG represents an interface between the access network device and a core network (for example, a 5G core network (5G core, 5GC)). Xn-C represents an interface between two access network devices. For example, CUs of the two access network devices may communicate with each other.

For example, FIG. 6 is a diagram of another structure of an access network device. It can be learned from FIG. 6 that a CU included in the access network device may further include a CU-control plane (control plane, CP) and a CU-user plane (user plane, UP). For example, the access network device is a gNB, the gNB includes a gNB-CU, and the gNB-CU further includes a gNB-CU-CP and a gNB-CU-UP. The gNB-CU-CP is a logical node that carries RRC and a PDCP control plane part, and the gNB-CU-CP is a logical node that carries a PDCP user plane part and an SDAP. An interface between the gNB-CU-CP and the gNB-CU-UP is an E1 interface, an interface between the gNB-CU-CP and a gNB-DU is an F1-C interface, and an interface between the gNB-CU-UP and a gNB-DU is an F1-U interface.

One gNB may include one CU-CP, and may include a plurality of CU-UPs and a plurality of DUs. In other words, one CU may include one CU-CP and one or more CU-UPs. That is, one CU-CP may be connected to the one or more CU-UPs. One CU may be connected to one or more DUs, and one CU-CP may be connected to the one or more DUs. In addition, the CU-UP may also be connected to the DU. For example, under control of a same CU-CP, one CU-UP may be connected to at least one DU, and one DU may also be connected to at least one CU-UP. A quantity of CU-UPs may be equal to or different from a quantity of DUs. For example, one CU-CP is connected to five CU-UPs and eight DUs, and one of the five CU-UPs may be connected to some or all of the eight DUs. In addition, one of the eight DUs may also be connected to some or all of the five CU-UPs.

In embodiments of this application, an access network device, a CU, a DU, a CU-UP, a CU-CP, and the like are considered as network elements. A difference lies in that the access network device may be considered as a physical network element, and the CU, the DU, the CU-UP, the CU-CP, and the like may be considered as logical network elements, for example, functional units included in the physical network element.

To better describe embodiments of this application, the following describes methods provided in embodiments of this application with reference to the accompanying drawings. In embodiments of this application, an example in which UE is in an RRC inactive state is used.

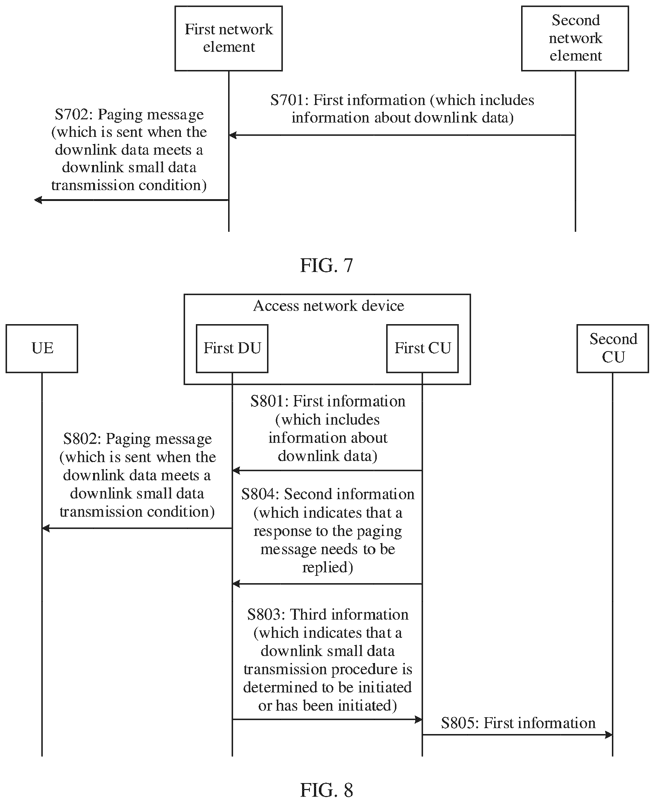

An embodiment of this application provides a first communication method. A flowchart of the method is shown in FIG. 7. The method may be applied to a network architecture shown in any one of the accompanying drawings in FIG. 4 to FIG. 6. For example, UE in the method is the UE in FIG. 4, and a first network element in the method is the access network device in FIG. 4, the DU in the access network device 1 in FIG. 5, the CU-CP in FIG. 6, or the DU in FIG. 6.

S701: A second network element sends first information to the first network element. Correspondingly, the first network element receives the first information from the second network element.

For example, the first information includes (or indicates) information about downlink data, and the downlink data is from a core network device. For example, if the core network device sends the downlink data to the second network element, the downlink data is currently stored in the second network element. However, the first network element determines whether the downlink data can be transmitted through a downlink small data transmission procedure. Therefore, the second network element may send the first information to the first network element, so that the first network element can determine whether the downlink data can be sent to UE through a downlink small data transmission procedure.

Optionally, the first network element is a DU, and the second network element is a CU. The CU may be considered as a whole, or the CU may be a CU-CP or a CU-UP.

Alternatively, optionally, the first network element is a CU-CP, and the second network element is a CU-UP.

S702: The first network element sends a paging message if the downlink data meets a downlink small data transmission condition. The paging message may indicate the UE to initiate the downlink small data transmission procedure.

After obtaining information about the downlink data, the first network element may determine, based on the information about the downlink data, whether downlink small data transmission can be performed, that is, determine whether the downlink data meets the downlink small data transmission condition. If the downlink data meets the downlink small data transmission condition, the first network element may send the paging message, where the paging message may indicate the UE to initiate the downlink small data transmission procedure. If the downlink data does not meet the downlink small data transmission condition, the first network element may alternatively send a corresponding message (for example, also a paging message, or another type of message), where the message, for example, indicates the UE to enter an RRC connected state or the like. For example, when the first network element is a DU, the DU sends the paging message to the UE. When the first network element is a CU-CP, the CU-CP sends the paging message to a DU. After receiving the paging message from the CU-CP, the DU sends the paging message to the UE.

For example, if a size of the downlink data is less than or equal to a first threshold, it is considered that the downlink data meets the downlink small data transmission condition; or if the size of the downlink data is greater than the first threshold, it is considered that the downlink data does not meet the downlink small data transmission condition. For another example, if the size of the downlink data is less than or equal to the first threshold, and the UE that is configured to receive the downlink data supports the downlink small data transmission procedure, it is considered that the downlink data meets the downlink small data transmission condition. However, if the size of the downlink data is greater than the first threshold, and/or the UE that is configured to receive the downlink data does not support the downlink small data transmission procedure, it is considered that the downlink data does not meet the downlink small data transmission condition.

In this embodiment of this application, although the downlink data to be sent to the UE does not reach the first network element, for example, reaches the second network element, the second network element may send the first information to the first network element, so that the first network element can determine whether to initiate the downlink small data transmission procedure. For example, the first network element is a DU, and the downlink data from the core network may reach a CU. In this case, the CU may send the first information to the DU, so that the DU can determine, based on the first information, whether the data meets the downlink small data transmission condition. Alternatively, the first network element is, for example, a CU-CP, and downlink small data from the core network device may reach a CU-UP. In this case, the CU-UP may send the first information to the CU-CP, so that the CU-CP can determine, based on the first information, whether the downlink data meets the downlink small data transmission condition. That is, this embodiment of this application provides an implementation of a downlink small data transmission mechanism for a new structure of an access network device.

The following describes, by using some specific embodiments, the technical solution provided in the embodiment shown in FIG. 7. For example, FIG. 8 is a first optional implementation of the technical solution provided in the embodiment shown in FIG. 7. In the embodiment shown in FIG. 8, that the first network element is a DU and the second network element is a CU is used as an example.

S801: ACU sends first information to a DU. Correspondingly, the DU receives the first information from the CU.

For example, if the CU receives, from a core network device, downlink data to be sent to UE, the CU may send the first information to the DU. The first information may include (or indicate) information about the downlink data. In addition, currently, a downlink small data transmission procedure is not initiated every time the downlink data arrives. An access network device (for example, a CU) needs to first configure, for UE, a radio bearer (radio bearer, RB) that can be used for SDT. The radio bearer includes a data radio bearer (data radio bearer, DRB) and a signaling radio bearer (signal radio bearer, SRB), these RBs may be referred to as SDT RBs, and only data on an SDT RB can be transmitted through an SDT process. If downlink data arrives on a non-SDT RB, the SDT process cannot be initiated. Each RB includes one PDCP, RLC, and one logical channel (logical channel, LCH), and the RB is mainly used to carry data or signaling in a data transmission procedure. Therefore, optionally, if the downlink data from the core network is carried through an SDT DRB, the CU may send the first information to the DU. However, if the downlink data is not carried through the SDT DRB, but is carried through another DRB, the CU may not need to send the first information to the DU. In other words, the method in this embodiment of this application does not need to be performed.

For example, the first information includes one or more of the following: a size of the downlink data, a size relationship between a size of the downlink data and a first threshold, or capability information of UE. The UE is configured to receive the downlink data. The capability information may indicate whether the UE supports downlink small data transmission. For example, a capability indicated by the capability information may also be referred to as a downlink (MT)-SDT capability or the like.

For example, the first threshold is set in the CU. For example, the first threshold is predefined in a protocol, is set by the CU, or may be set by the core network device. The first threshold may be used to determine whether the downlink data meets a downlink small data transmission condition. Optionally, the first information may include the size relationship between the size of the downlink data and the first threshold. For example, the size relationship indicates that the size of the downlink data is greater than the first threshold, or the size relationship indicates that the size of the downlink data is less than or equal to the first threshold. Optionally, if the first information includes the size relationship between the size of the downlink data and the first threshold, the first information may not include the size of the downlink data. However, transmission space occupied by the size relationship may be smaller than transmission space occupied by the size of the downlink data. For example, the transmission space occupied by the size relationship may be implemented by using one bit (bit). If a value of the bit is "1", it indicates that the size of the downlink data is less than or equal to the first threshold, or if the value of the bit is "0", it indicates that the size of the downlink data is greater than the first threshold. If the first information includes the size relationship, transmission overheads can be reduced.

Alternatively, if no first threshold is set in the CU, or even if the first threshold is set in the CU, the first information may include the size of the downlink data. In this way, the DU can directly determine the size of the downlink data.

In addition, capabilities of different UEs may vary. For example, some UEs may support downlink small data transmission, while some UEs may not support downlink small data transmission. The DU may not learn of a capability of UE in advance. Optionally, the first information may include the capability information of the UE, so that the DU can also determine, based on the capability information of the UE, whether downlink small data transmission procedure can be performed.

The following describes several possible implementations of the first information.
1. The first information includes the size of the downlink data, and includes the capability information of the UE; or the first information includes the size relationship between the size of the downlink data and the first threshold, and includes the capability information of the UE.
2. The first information includes the size of the downlink data, or includes the size relationship between the size of the downlink data and the first threshold.

For example, before the downlink data arrives, the CU and the DU may exchange the capability information of the UE with each other. For example, when an initial connection is established between the CU and the DU, the CU may send context information of the UE to the DU, and the context information may include the capability information of the UE. In this case, when the downlink data arrives, the CU does not need to send the capability information of the UE to the DU. In this way, a process of sending the capability information of the UE is not needed. Therefore, transmission overheads can be reduced.

3. The first information includes the size of the downlink data.

For example, the CU may determine the downlink data, that is, determine whether the downlink data meets the downlink small data transmission condition. If the downlink data meets the downlink small data transmission condition, the CU may send the first information to the DU. However, if the downlink data does not meet the downlink small data transmission condition, the CU may not send the first information to the DU. In this manner, if the CU sends the first information to the DU, it is equivalent to implicitly indicating that the downlink data meets the downlink small data transmission condition. However, if the CU does not send the first information to the DU, it is equivalent to implicitly indicating that the downlink data does not meet the downlink small data transmission condition.

In addition, the first information may be implemented in another manner. This is not specifically limited.

The CU in S801 may be of a complete CU structure, that is, the CU does not further include a CU-CP or a CU-UP. Alternatively, the CU in S801 may further include a CU-CP and a CU-UP. If the CU in S801 includes a CU-CP and a CU-UP, optionally, the CU-UP may send the first information to the DU. For example, if the CU-UP receives the downlink data from the core network device, the CU-UP may send the first information to the DU. For example, the first information is sent based on an F1-U interface message. One CU-UP may be connected to one or more DUs. Therefore, the CU-UP may send the first information to all or some DUs connected to the CU-UP.

Alternatively, if the CU in S801 includes a CU-CP and a CU-UP, optionally, the CU-CP may send the first information to the DU. In this case, the first information is sent based on, for example, an F1-C interface message. For example, the first information is sent based on paging (paging) of an F1 interface. If the first information is sent based on the paging of the F1 interface, all or some DUs connected to the CU-CP may receive the first information.

In addition, because the core network device may send the downlink data to the CU-UP, if the first information is sent by the CU-CP to the DU, optionally, the method may further include a step of sending fourth information to the CU-CP by the CU-UP. Correspondingly, the CU-CP receives the fourth information from the CU-UP. For example, if the CU-UP determines that the downlink data is carried through an SDT DRB, the CU-UP may send the fourth information to the CU-CP. For example, the step of sending the fourth information to the CU-CP by the CU-UP is performed before S801, and the fourth information may include the information about the downlink data. After receiving the fourth information, the CU-CP may obtain the first information based on the fourth information, and then send the first information to the DU. In addition, if the first information is sent by the CU-CP to the DU, the CU-CP may be considered as a second network element. Alternatively, because the first information is obtained based on the fourth information, it may also be considered that the DU receives the first information from the CU-UP through the CU-CP. Therefore, the CU-UP may also be considered as a second network element.

For example, the fourth information includes one or more of the following: the size of the downlink data, the size relationship between the size of the downlink data and the first threshold, or the capability information of the UE configured to receive the downlink data. The CU-CP may determine the first information based on the fourth information. Optionally, content included in the fourth information may be the same as content included in the first information. For example, the fourth information includes the size of the downlink data, and the first information also includes the size of the downlink data. For another example, the fourth information includes the size relationship between the size of the downlink data and the first threshold, and the first information also includes the size relationship between the size of the downlink data and the first threshold. Alternatively, content included in the fourth information may be different from content included in the first information. For example, the fourth information includes the size of the downlink data. Because the CU-CP maintains the first threshold, the CU-CP may determine the size relationship between the size of the downlink data and the first threshold. In this case, the first information may include the size relationship between the size of the downlink data and the first threshold.

The fourth information is included in, for example, an E1 interface message, and the E1 interface message is referred to as, for example, a first E1 interface message. The first E1 interface message is, for example, a downlink data notification (DL data notification), or may be another message.

The fourth information may be actively sent by the CU-UP to the CU-CP. For example, if the downlink data arrives on the SDT DRB, the CU-UP may send the fourth information to the CU-CP. Alternatively, the fourth information may be sent at a request of the CU-CP. For example, the CU-CP may send eighth information to the CU-UP, and the eighth information may request the CU-UP to send the information about the downlink data to the CU-CP. In this case, if the downlink data arrives on the SDT DRB, the CU-UP may send the fourth information to the CU-CP. For example, the CU-CP may send the eighth information to the CU-UP when establishing an initial connection to the CU-UP. This is equivalent to setting a rule for the CU-UP. In this case, the CU-UP may subsequently work according to the rule, and if the downlink data arrives on the SDT DRB, the CU-UP may send the fourth information to the CU-CP. Optionally, the eighth information may further include the first threshold. For example, the first threshold is set in the CU-CP, and the CU-CP may send the first threshold to the CU-UP, so that the CU-UP may send, to the CU-CP, both the size of the downlink data and the size relationship between the size of the downlink data and the first threshold.

The eighth information is included in, for example, an E1 interface message, and the E1 interface message is referred to as, for example, a second E1 interface message. The second E1 interface message is, for example, a bearer context modification request (bearer context modification request), or may be another message.

S802: If the downlink data meets the downlink small data transmission condition, the DU sends a paging message.

After receiving the first information, the DU may determine, based on the first information, whether the downlink data meets the downlink small data transmission condition. For example, if the size of the downlink data is less than or equal to the first threshold, it is considered that the downlink data meets the downlink small data transmission condition; or if the size of the downlink data is greater than the first threshold, it is considered that the downlink data does not meet the downlink small data transmission condition. For another example, if the size of the downlink data is less than or equal to the first threshold, and the UE that is configured to receive the downlink data supports the downlink small data transmission procedure, it is considered that the downlink data meets the downlink small data transmission condition. However, if the size of the downlink data is greater than the first threshold, and/or the UE that is configured to receive the downlink data does not support the downlink small data transmission procedure, it is considered that the downlink data does not meet the downlink small data transmission condition. If the first information includes the size of the downlink data, the DU may determine, based on the size of the downlink data and the first threshold, whether the size of the downlink data is less than or equal to the first threshold or greater than the first threshold. However, if the first information includes the size relationship between the size of the downlink data and the first threshold, the DU can determine, based on the first information, whether the size of the downlink data is less than or equal to the first threshold or greater than the first threshold. Therefore, a determining process is not needed. For example, the first threshold is set by the DU, is predefined in a protocol, or may be set and notified to the DU by the core network device.

If the downlink data meets the downlink small data transmission condition, the DU may send paging. For example, a receive end that receives the paging is one or more UEs. Optionally, the paging may include downlink small data transmission indication information. For example, the downlink small data transmission indication information is also referred to as an MT-SDT indicator, and the downlink small data transmission indication information may indicate to initiate the downlink small data transmission procedure.

S803: The DU sends third information to the CU. Correspondingly, the CU receives the third information from the DU. The third information may indicate that the downlink small data transmission procedure is determined to be initiated, or indicate that the downlink small data transmission procedure is currently initiated.

For example, the CU may send the first information to a plurality of DUs, and the plurality of DUs may initiate paging. In this case, in S803, all of the plurality of DUs may send the third information to the CU. In this way, the CU may need to receive too much information. To save signaling overheads, optionally, before S803, S804 is further included. The CU sends second information to the DU, and the DU receives the second information from the CU. The DU is, for example, one of the plurality of DUs. For example, the DU is referred to as a first DU (as shown in FIG. 8). The second information may indicate that the first DU needs to return, to the CU, a response to the paging, or indicate that the first DU needs to reply to the CU whether to initiate the downlink small data transmission procedure. In this case, a DU (for example, the first DU) that receives the second information may send the third information to the CU, and the third information may be considered as a response to the paging. However, a DU that does not receive the second information may not need to send the third information to the CU, thereby reducing signaling overheads. Optionally, the second information may be sent together with the first information. For example, the second information and the first information may be sent in a same message. Alternatively, the second information may be sent separately.

If the CU further includes a CU-CP and a CU-UP, the CU in S803 is, for example, the CU-CP, or may be the CU-UP. For example, if the first information is sent by the CU-CP to the DU, the CU in S803 is, for example, the CU-CP. Alternatively, if the first information is sent by the CU-UP to the DU, the CU in S803 is, for example, the CU-UP.

In this embodiment of this application, if the downlink data arrives at the CU (or arrives at the CU-UP), it indicates that an access network device corresponding to the CU is an anchor access network device of the UE. However, the UE may move. For example, the UE may move to a coverage area of another access network device. Therefore, the anchor access network device needs to send a notification to the another access network device that is located in a same RAN-based notification area (RAN-based notification area, RNA) as the anchor access network device, to indicate to perform the downlink small data transmission procedure. If an access network device on which the UE currently camps and the anchor access network device are located in a same RNA, the access network device may receive the notification.

Therefore, optionally, the method further includes S805. The CU sends the first information to another CU, and the another CU receives the first information from the CU. Alternatively, S805 may be alternatively replaced with: The CU sends ninth information to another CU, and the another CU receives the ninth information from the CU, where the ninth information is determined based on the first information or is determined based on the fourth information. For better differentiation, in this embodiment of this application, the foregoing CU is referred to as a first CU, the another CU is referred to as a second CU, and the first CU and the second CU correspond to different access network devices. The first CU corresponds to the anchor access network device of the UE, and the first CU may be considered as an anchor network element of the UE. The second CU corresponds to the access network device on which the UE currently camps, and the second CU may be considered as a network element on which the UE currently camps. If the CU further includes a CU-CP and a CU-UP, optionally, a CU-CP (for example, referred to as a first CU-CP) included in the first CU may send the first information to a CU-CP (for example, referred to as a second CU-CP) included in the second CU.

If the ninth information is determined based on the first information, the ninth information may be the same as the first information. For example, the first information includes the size of the downlink data, and the ninth information also includes the size of the downlink data. Alternatively, content included in the ninth information may be different from content included in the first information. For example, the ninth information includes the size of the downlink data, and the first information includes the size relationship between the size of the downlink data and the first threshold. Similarly, if the ninth information is determined based on the fourth information, the ninth information and the fourth information may be the same or may be different. Details are not described again.

Because the UE currently camps on the another access network device, the anchor access network device cannot determine an access network device on which the UE currently camps. If the anchor access network device sends the downlink data to the another access network device, the downlink data may be sent in a paging manner, or may be separately sent based on an Xn interface message to a plurality of access network devices that are located in a same RNA as the anchor access network device. Only one of the access network devices may be an access network device on which the UE currently camps. For other access network devices, the downlink data is invalid data. As a result, the plurality of access network devices receive redundant data, and transmission resources are wasted. Therefore, optionally, the anchor access network device may not send the downlink data to the another access network device first, but send only the first information or the ninth information. If the access network device on which the UE currently camps receives the first information or the ninth information, and considers that the downlink small data transmission procedure may be initiated, the access network device may exchange information with the anchor access network device again, for example, may request a context of the UE from the anchor access network device. Then, the anchor access network device sends the downlink data to the access network device. In this way, a waste of transmission resources can be reduced.

Optionally, the first information or the ninth information is sent based on, for example, paging of an Xn interface, or may be sent based on another Xn interface message. If the first information or the ninth information is sent based on the paging, the second CU is, for example, one of CUs that receive the first information or the ninth information. Alternatively, even if the first information or the ninth information is sent based on the another Xn interface message, the first CU may send the first information or the ninth information to a plurality of CUs. In this case, the second CU is, for example, one of CUs that receive the first information or the ninth information. After the second CU (or the second CU-CP) receives the ninth information or the first information, an access network device corresponding to the second CU may continue to perform S801 to S803. Details are not described again.

In some implementations, if the first CU is an anchor network element of the UE, and the UE currently does not camp on the first CU, the DU may not send paging. Because UE that should receive the downlink data does not currently camp on the first CU, even if the DU sends the paging, the UE cannot receive the paging. Therefore, the DU may not need to send the paging. For example, the DU may send the third information to the first CU, and the first CU notifies another CU.

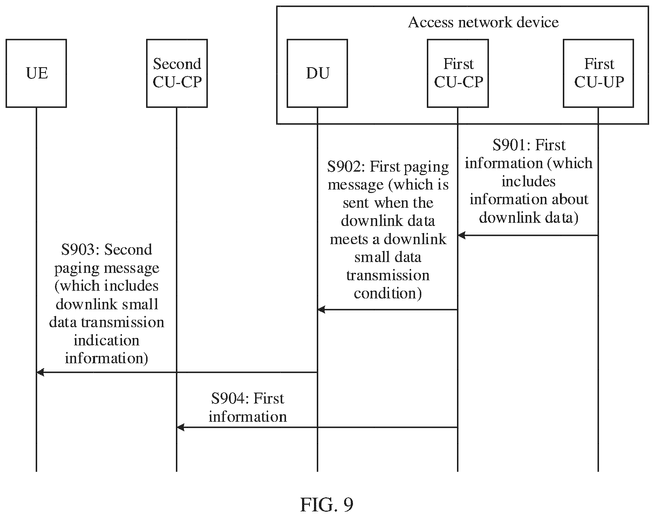

In the embodiment shown in FIG. 8, the DU determines whether to initiate the downlink small data transmission procedure. In addition, the CU may decide whether to initiate the downlink small data transmission procedure. Because the core network device sends the downlink data to the CU, the CU directly decides whether to initiate the downlink small data transmission procedure. Alternatively, if the CU is further divided, a decision may be made by the CU-UP or the CU-CP. If the CU-UP makes a decision, because the core network device sends the downlink data to the CU-UP, the CU-UP directly makes a decision. However, if the CU-CP makes a decision, the core network device sends the downlink data to the CU-UP, and the CU-CP cannot directly obtain the downlink data. Therefore, an embodiment of this application may provide a method, so that the CU-CP can make a decision. For example, FIG. 9 is a flowchart of the method, and the method is also another optional implementation of the embodiment shown in FIG. 7.

S901: A CU-UP sends first information to a CU-CP. Correspondingly, the CU-CP receives the first information from the CU-UP.

For example, when downlink data arrives, the CU-UP may send the first information to the CU-CP. Alternatively, if the downlink data arrives on an SDT DRB, the CU-UP may send the first information to the CU-CP. For content included in or indicated by the first information, refer to descriptions of S801 in the embodiment shown in FIG. 8.

For example, the first information is included in an E1 interface message, and the E1 interface message is, for example, a DL data notification, or may be another message. The first information may be actively sent by the CU-UP to the CU-CP. For example, if the downlink data arrives on the SDT DRB, the CU-UP may send the first information to the CU-CP. Alternatively, the first information may be sent at a request of the CU-CP. For content of this part, refer to related descriptions of the fourth information in S801 in the embodiment shown in FIG. 8.

S902: If the downlink data meets a downlink small data transmission condition, the CU-CP sends a paging message.

After receiving the first information, the CU-CP may determine, based on the first information, whether the downlink data meets the downlink small data transmission condition. For a determining manner, refer to descriptions of the embodiment shown in FIG. 7 or the embodiment shown in FIG. 8.

If the downlink data meets the downlink small data transmission condition, the CU-CP may send paging. For example, a receive end that receives the paging are some or all DUs connected to the CU-CP. The paging is sent through, for example, an F1 interface. Therefore, the paging is also referred to as F1 paging. Optionally, the paging may include downlink small data transmission indication information. For example, the downlink small data transmission indication information is also referred to as an MT-SDT indicator, and the downlink small data transmission indication information may indicate to initiate a downlink small data transmission procedure.

S903: A DU sends paging. For example, a receive end that receives the paging is one or more UEs. For differentiation, the paging in S902 may be referred to as first paging, and the paging in S903 may be referred to as second paging. Optionally, the second paging may also include the downlink small data transmission indication information.

In this embodiment of this application, if the downlink data arrives at the CU-UP, it indicates that an access network device corresponding to the CU-UP is an anchor access network device of UE. However, the UE may move. For example, the UE may move to a coverage area of another access network device. Therefore, the anchor access network device needs to send a notification to the another access network device that is located in a same RNA as the anchor access network device, to indicate to perform the downlink small data transmission procedure. If an access network device on which the UE currently camps and the anchor access network device are located in a same RNA, the access network device may receive the notification. Therefore, optionally, the method further includes S904. The CU sends the first information to another CU, and the another CU receives the first information from the CU. Alternatively, S904 may be alternatively replaced with: The CU sends ninth information to another CU, and the another CU receives the ninth information from the CU.

For better differentiation, the foregoing CU is referred to as a first CU, the another CU is referred to as a second CU, and the first CU and the second CU correspond to different access network devices. The first CU corresponds to the anchor access network device of the UE, and the first CU may be considered as an anchor network element of the UE. The second CU corresponds to the access network device on which the UE currently camps, and the second CU may be considered as a network element on which the UE currently camps. If a CU further includes a CU-CP and a CU-UP, optionally, a CU-CP included in the first CU may send the first information to a CU-CP included in the second CU. This is used as an example in FIG. 9. The CU-CP included in the first CU is the CP-CP in this embodiment of this application, and may be referred to as a first CU-CP, and the CU-CP included in the second CU is referred to as a second CU-CP. It should be noted that the second CU (or the second CU-CP) is, for example, a functional unit in the access network device on which the UE currently camps, and the access network device may further include other functional units, for example, a DU. However, the access network device on which the UE currently camps and other functional units of the access network device are not shown in FIG. 9.

For more content of S904, refer to descriptions of S805 in the embodiment shown in FIG. 8.

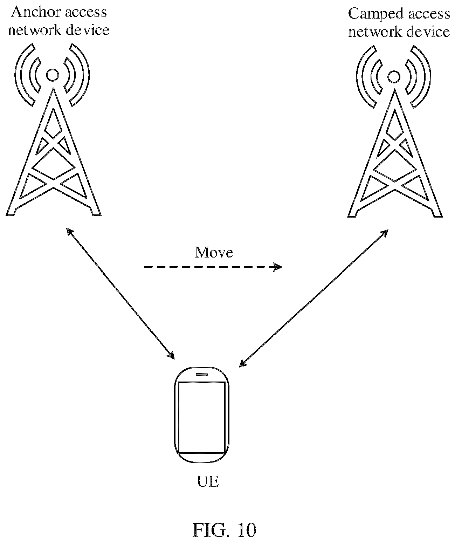

The following describes another question. It can be learned from the foregoing descriptions that, for UE in an RRC inactive state, if a small data transmission procedure is performed, an access network device on which the UE currently camps requests a context of the UE from an anchor access network device of the UE. In addition, if a downlink small data transmission procedure is not performed, for example, the UE in the RRC inactive state needs to resume an RRC connection, the access network device on which the UE currently camps also needs to request the context of the UE from the anchor access network device of the UE. For example, FIG. 10 shows a case in which the UE moves from the anchor access network device to the access network device on which the UE currently camps. If the UE performs small data transmission or requests to resume the RRC connection, the currently camped access network device (namely, a camped access network device in FIG. 10) needs to request the context of the UE from the anchor access network device.

After receiving the request from the access network device on which the UE currently camps, the anchor access network device may determine whether to perform anchor relocation. According to this embodiment of this application, if the small data transmission procedure is currently performed, anchor relocation may not need to be performed because the UE does not need to enter an RRC connected state, but only transmits small data, and is still in the RRC inactive state after transmission is complete. In addition, the UE may continue to move and enter a coverage area of another access network device. Therefore, there is no need to relocate the context of the UE. However, because the anchor access network device does not learn of a purpose of requesting the context of the UE by the access network device on which the UE currently camps, the anchor access network device may still decide to perform anchor relocation. As a result, transmission resources are wasted.

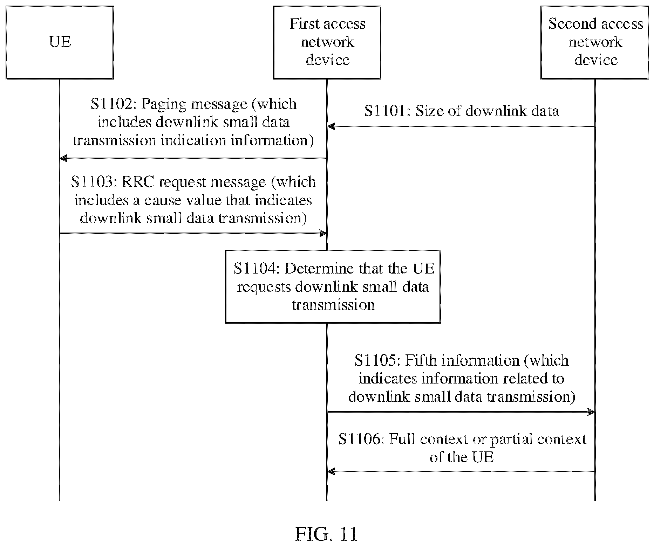

In view of this, an embodiment of this application provides a communication method. According to the method, the anchor access network device can learn of the purpose of requesting to retrieve the context of the UE by the access network device on which the UE currently camps, so that the anchor access network device can make a more reasonable decision. For example, FIG. 11 is a flowchart of the method. The method may be applied to a network architecture shown in any one of the accompanying drawings in FIG. 5, FIG. 6, or FIG. 10. For example, UE in the method is the UE in FIG. 10, a first access network device in the method is the camped access network device (namely, the access network device on which the UE currently camps) in FIG. 10, and a second access network device in the method is the anchor access network device in FIG. 10. The first access network device may not further include a CU and a DU, or may include a CU and a DU. If the first access network device includes the CU and the DU, for a structure of the first access network device, refer to the access network device 1 in FIG. 5. In addition, if the first access network device includes a CU, the CU may not further include a CU-UP and a CU-CP, or may include a CU-UP and a CU-CP. If the first access network device includes the CU-UP and the CU-CP, for a structure of the first access network device, refer to FIG. 6. The second access network device is similar to the first access network device.

S1101: The second access network device sends sixth information to the first access network device. Correspondingly, the first access network device receives the sixth information from the second access network device.

Optionally, the sixth information may be sent based on a paging message of an Xn interface. For example, the second access network device sends paging to an access network device that is located in a same RNA as the second access network device, to send the sixth information. In this case, the first access network device is one of access network devices that receive the sixth information. For example, a CU (or a CU-CP) of the second access network device sends the sixth information to a CU (for example, a CU-CP) of the first access network device. The sixth information and the first information in any one of embodiments shown in FIG. 7 to FIG. 9 may be the same information. Therefore, for descriptions of the sixth information, refer to the foregoing embodiments. In FIG. 11, an example in which the sixth information indicates a size of downlink data to be sent to UE is used.

Any one of embodiments shown in FIG. 7 to FIG. 9 may be applied in combination with the embodiment shown in FIG. 11. For example, S1101 and S805 in the embodiment shown in FIG. 8 may be a same step, or S1101 and S904 in the embodiment shown in FIG. 9 may be a same step. Alternatively, the embodiment shown in FIG. 11 may not be combined with the foregoing embodiments, but may be applied independently.

S 1102: The first access network device sends paging, to page UE. A receive end of the paging is one or more UEs.

Optionally, the paging may include downlink small data transmission indication information. For the downlink small data transmission indication information, refer to descriptions in the foregoing embodiments. For example, a DU of the first access network device sends the paging.

S1103: The UE sends an RRC request message to the first access network device. Correspondingly, the first access network device receives the RRC request message from the UE. For example, the UE sends the RRC request message to the DU of the first access network device, and the DU may forward the RRC request message to a CU of the first access network device, or forward the RRC request message to a CU-CP. Optionally, the RRC request message is, for example, an RRC resume request.

After receiving the paging, the UE may learn, based on the downlink small data transmission indication information, that downlink small data needs to be received currently. If the UE determines to receive the downlink small data, the UE may initiate an RRC connection resume process, where the RRC connection resume process is used for downlink small data transmission. The UE initiates the RRC connection resume process. For example, in an implementation, the UE sends the RRC request message to the first access network device. Therefore, it may be considered that the RRC request message is used by the UE to request downlink small data transmission, is used by the UE to initiate downlink small data transmission, is used by the UE to initiate small data transmission, is used by the UE to request small data, or is used by the UE to request downlink small data.

Optionally, the UE may set a value of cause information included in the RRC request message, to indicate, based on the value of the cause information, that the UE requests downlink small data transmission, initiates downlink small data transmission, initiates small data transmission, requests small data, or request downlink small data. For example, the RRC request message may include a "resume cause (resume cause)" field, and the "resume cause" field may be used as the cause information. The UE may set a value of the "resume cause" field to a first value. The first value may indicate that the UE requests downlink small data transmission, initiates downlink small data transmission, initiates small data transmission, requests small data, or requests downlink small data. The first value is, for example, "MT-SDT".

Alternatively, in some optional implementations, the UE may set the value of the cause information to a second value. The second value may indicate downlink transmission, but the second value may not indicate information related to downlink small data. The second value only indicates downlink transmission. For example, the cause information is a "resume cause" field, and the second value is, for example, "MT-access (access)".

S 1104: The first access network device determines that the UE requests downlink small data transmission. Alternatively, the first access network device determines that the UE requests small data or downlink small data. Alternatively, the first access network device determines that the UE initiates small data or downlink small data. In this embodiment of this application, that the UE requests downlink small data transmission is mainly used as an example.

For example, the first access network device may determine a purpose of the UE based on the RRC request message. A determining manner may include one or more of the following: determining, based on the cause information included in the RRC request message, that the UE requests downlink small data transmission; determining, based on the downlink small data transmission indication information included in the paging sent by the first access network device, that the UE requests downlink small data transmission; determining, based on a resource used for receiving the RRC request message, that the UE requests downlink small data transmission; determining, based on a received random access preamble (preamble), that the UE requests downlink small data transmission; or determining, based on a resource used for receiving the preamble, that the UE requests downlink small data transmission. The following describes these determining manners by using examples.
1. The first access network device determines, based on the cause information included in the RRC request message, that the UE requests downlink small data transmission.

For example, the UE sets a value of the cause information included in the RRC request message. For example, the UE sets the value of the cause information to a first value, and the first value may indicate downlink small data transmission, indicate downlink small data, or indicate small data. In this case, the first access network device can determine, based on a case in which the value of the cause information is the first value, that the UE requests small data transmission, for example, requests downlink small data transmission. This indicating manner is simple and clear. For example, the cause information is a "resume cause" field, and the first value is "MT-SDT".

2. The first access network device determines, based on the downlink small data transmission indication information included in the paging sent by the first access network device, that the UE requests downlink small data transmission.

After the first access network device sends the paging (for example, executing S1102), the UE may send the RRC request message, that is, the UE initiates an RRC connection resume procedure. For example, the UE may initiate the RRC connection resume procedure by using a random access procedure. It should be noted that, in a random access process, the UE may further need to send a preamble to the first access network device. For example, before sending the RRC request message to the first access network device, the UE may first send the preamble to the first access network device. If the UE uses a 4-step (4-step) random access process, the RRC request message may be used as a third message (Msg3) in the random access process. If the UE uses a 2-step (2-step) random access process, the RRC request message may be used as a message A (MsgA) in the random access process.

Alternatively, the UE may initiate the RRC connection resume procedure by using a configured grant small data transmission (configured grant small data transmission, CG-SDT) resource. For an uplink small data transmission procedure, the first access network device may preconfigure a resource for the UE, and the resource is, for example, the CG-SDT resource. For example, the first access network device may preconfigure CG-SDT resources for some or all UEs in a coverage area of the first access network device. A configuration process may be completed when the UEs are in an RRC connected state, or the CG-SDT resources may be configured based on an RRC release message when the UEs are released to an RRC inactive state. Although the CG-SDT resource is used for uplink small data transmission, in this embodiment of this application, the UE may alternatively initiate, to the first access network device by using the CG-SDT resource, the RRC connection resume process used to perform downlink small data transmission. For example, the UE may send the RRC request message to the first access network device by using the CG-SDT resource.

As described in S1102, the paging sent by the first access network device may include the downlink small data transmission indication information. For example, the downlink small data transmission indication information is also referred to as an MT-SDT indicator. Therefore, the first access network device can explicitly indicate, to the UE based on the paging, to initiate a downlink small data transmission procedure. In this case, if the first access network device receives the RRC request message from the UE after sending the paging, it may be considered that the RRC request message is a response to the paging. In this case, the first access network device can determine, based on the downlink small data transmission indication information included in the paging, that the UE requests downlink small data transmission.

Optionally, the first access network device may further determine, with reference to the paging and a value of the cause information included in the RRC request message, a purpose of sending the RRC request message by the UE. For example, the UE sets the value of the cause information included in the RRC request message to a second value, and the second value may indicate downlink transmission. The first access network device may determine, with reference to the downlink small data transmission indication information included in the paging, that the UE requests downlink small data transmission. For example, the cause information is a "resume cause" field, and the second value is "MT-access". Alternatively, that the value of the cause information is the second value may not indicate downlink transmission, but indicate downlink small data transmission, or indicate downlink small data. In this case, the first access network device may determine, with reference to the downlink small data transmission indication information included in the paging and a case in which the value of the cause information is the second value, that the UE requests downlink small data transmission.

3. The first access network device determines, based on the resource used for receiving the RRC request message, that the UE requests downlink small data transmission.

Optionally, for a downlink small data transmission procedure, the first access network device may preconfigure a resource for the UE. For example, the first access network device may preconfigure, for some or all UEs in a coverage area of the first access network device, resources used for a downlink small data transmission procedure. A configuration process may be completed when the UEs are in an RRC connected state, or the resources may be configured based on an RRC release message when the UEs are released to an RRC inactive state. Alternatively, the resources may not be configured by the first access network device, but are predefined by a protocol, or the like. The UE may initiate, to the first access network device by using the resource, an RRC connection resume process used to perform downlink small data transmission. For example, the UE may send the RRC request message to the first access network device by using the resource. In this case, if the UE sends the RRC request message by using the resource, the first access network device can determine, based on the resource used for receiving the RRC request message, that a purpose of the RRC request message is downlink small data transmission.

Alternatively, for an uplink small data transmission procedure, the first access network device may preconfigure a resource for the UE, and the resource is, for example, a CG-SDT resource. Although the CG-SDT resource is used for uplink small data transmission, in this embodiment of this application, the UE may alternatively initiate, to the first access network device by using the CG-SDT resource, the RRC connection resume process used to perform downlink small data transmission. For example, the UE may send the RRC request message to the first access network device by using the CG-SDT resource. In this case, if the UE sends the RRC request message by using the CG-SDT resource, the first access network device can also determine, based on the CG-SDT resource, that the RRC request message is used for downlink small data transmission.

Optionally, for example, if the UE sends the RRC request message by using the CG-SDT resource, the first access network device may further determine, with reference to a value of the cause information included in the RRC request message, the purpose of sending the RRC request message by the UE. For example, the UE further sets the value of the cause information included in the RRC request message to a second value, and the second value indicates, for example, downlink transmission. In this case, the first access network device determines, based on the resource used for receiving the RRC request message, that the UE requests small data transmission, and determines, based on a case in which the value of the cause information included in the RRC request message is the second value, that the UE requests downlink transmission. In this way, the first access network device may determine that the UE requests downlink small data transmission. Alternatively, that the value of the cause information is the second value may not indicate downlink transmission, but indicate downlink small data transmission, or indicate downlink small data. In this case, the first access network device determines, based on the resource used for receiving the RRC request message, that the UE requests small data transmission, and determines, based on a case in which the value of the cause information included in the RRC request message is the second value, that the UE requests downlink small data transmission. In this way, the first access network device may determine that the UE requests downlink small data transmission.

4. The first access network device determines, based on the received preamble, that the UE requests downlink small data transmission; or the first access network device determines, based on the resource used for receiving the preamble, that the UE requests downlink small data transmission.

Optionally, for a downlink small data transmission procedure, the first access network device may preconfigure the preamble. For example, the first access network device may configure one or more types of preambles, and these preambles are specifically sent when the UE initiates downlink small data transmission. Alternatively, the first access network device may preconfigure resources for sending the preamble, and the resources for sending the preamble are specifically sent when the UE initiates downlink small data transmission. For example, the first access network device may configure, for UE in a coverage area of the first access network device based on system information, a preamble used for a downlink small data transmission procedure or a resource for sending the preamble. Alternatively, the preamble may not be configured by the first access network device, but is predefined by a protocol, or the like. If the UE determines to initiate downlink small data transmission, the UE may send a corresponding preamble to the first access network device or use a corresponding resource for sending the preamble. The first access network device can determine, based on the received preamble or the resource for transmitting the preamble, that the UE requests to initiate downlink small data transmission.

Alternatively, the UE may send the preamble by using a random access resource in an uplink small data transmission procedure. In an uplink small data transmission procedure, the UE may send the preamble by using the configured random access resource, and after sending the preamble, the UE may further send the RRC request message to resume an RRC connection. In this embodiment of this application, the UE may alternatively send the preamble by using a random access resource originally used for uplink small data transmission, and after sending the preamble, the UE may send the RRC request message in this embodiment of this application, to request downlink small data transmission. Therefore, if the UE sends the preamble by using the random access resource used for uplink small data transmission, and sends the RRC request message after sending the preamble, the first access network device may determine, based on a resource used for receiving the preamble, that the RRC request message is used for downlink small data transmission.

Optionally, if the UE sends the preamble by using the random access resource in an uplink small data transmission procedure, the first access network device may further determine, with reference to a value of the cause information included in the RRC request message, the purpose of sending the RRC request message by the UE. For example, the UE sends the preamble by using the random access resource used for uplink small data transmission. In addition, the UE further sets the value of the cause information included in the subsequently sent RRC request message to a second value, and the second value indicates, for example, downlink transmission. In this case, the first access network device determines, based on the resource used for receiving the preamble, that the UE requests small data transmission, and determines, based on a case in which the value of the cause information included in the RRC request message is the second value, that the UE requests downlink transmission. In this way, the first access network device may determine that the UE requests downlink small data transmission. Alternatively, that the value of the cause information is the second value may not indicate downlink transmission, but indicate downlink small data transmission, or indicate downlink small data. In this case, the first access network device determines, based on the resource used for receiving the preamble, that the UE requests small data transmission, and determines, based on a case in which the value of the cause information included in the RRC request message is the second value, that the UE requests downlink small data transmission. In this way, the first access network device may determine that the UE requests downlink small data transmission.

Alternatively, in an uplink small data transmission procedure, preambles may be preconfigured for the UE. Provided that the UE sends these preconfigured preambles, it indicates that the UE requests uplink small data transmission. In this embodiment of this application, these preambles may be used. If the first access network device receives a preamble originally indicating uplink small data transmission, it may be determined that the UE requests downlink small data transmission.

Optionally, if the UE uses a preamble in an uplink small data transmission procedure, the first access network device may further determine, with reference to a value of the cause information included in the RRC request message, a purpose of sending the RRC request message by the UE. For example, the UE sends the preamble used for uplink small data transmission. In addition, the UE further sets the value of the cause information included in the subsequently sent RRC request message to a second value, and the second value indicates, for example, downlink transmission. In this case, the first access network device determines, based on the preamble, that the UE requests small data transmission, and determines, based on a case in which the value of the cause information included in the RRC request message is the second value, that the UE requests downlink transmission. In this way, the first access network device may determine that the UE requests downlink small data transmission. Alternatively, that the value of the cause information is the second value may not indicate downlink transmission, but indicate downlink small data transmission, or indicate downlink small data. In this case, the first access network device determines, based on the received preamble, that the UE requests small data transmission, and determines, based on a case in which the value of the cause information included in the RRC request message is the second value, that the UE requests downlink small data transmission. In this way, the first access network device may determine that the UE requests downlink small data transmission.

The foregoing is merely some examples. In addition, when determining the purpose of sending the RRC request message by the UE, the first access network device may further determine by performing any combination of the foregoing several determining manners. It should be noted that the fourth determining manner is considered to include two determining methods. When the foregoing determining manners are combined, both the two determining manners in the fourth determining manner exist independently, and may be combined with any other determining manner. For example, in a combination manner, the first access network device may determine, based on the downlink small data transmission indication information included in the sent paging and the resource for receiving the preamble, that the UE requests downlink small data transmission. For another example, in another combination manner, the first access network device may determine, based on the downlink small data transmission indication information included in the sent paging and the CG-SDT resource for receiving the RRC request message, that the UE requests downlink small data transmission. A combination manner of the foregoing determining manners is not limited in embodiments of this application.

Alternatively, in addition to the foregoing manners, the first access network device may determine, in another manner, the purpose of sending the RRC request message by the UE. This is not limited.

S1105: The first access network device sends fifth information to the second access network device. Correspondingly, the second access network device receives the fifth information from the first access network device.

The fifth information may include (or indicate) information related to downlink small data transmission. For example, the RRC request message received by the first access network device in S1103 includes the cause information, and the cause information may indicate that the UE requests downlink small data transmission. In this case, the first access network device may obtain the fifth information based on the cause information, and send the fifth information to the second access network device. For example, if a value of the cause information is a first value, it indicates that the UE requests downlink small data transmission. In this case, the first access network device may obtain the fifth information based on a case in which the value of the cause information is the first value. Optionally, the cause information may be used as the information that is related to downlink small data transmission and that is included in the fifth information, and when the cause information is used as the information that is related to downlink small data transmission and that is included in the fifth information, a value of the cause information is a first value. For example, the cause information included in the RRC request message is a "resume cause" field, and the UE sets the "resume cause" field to the first value, for example, the first value is "MT-SDT". In this case, the first access network device may add "MT-SDT" to the fifth information as the information that is related to downlink small data transmission and that is included in the fifth information. As described above, the first access network device may obtain the fifth information based on the "first value". After receiving the fifth information, the second access network device can determine, based on a case in which the value of the cause information is the first value, that the UE requests downlink small data transmission. Alternatively, optionally, another manner in which the first access network device obtains the fifth information based on the cause information is that the first access network device may not add the cause information to the fifth information, but may add corresponding indication information to the fifth information based on the cause information. For example, the cause information included in the RRC request message is a "resume cause" field, and the UE sets the "resume cause" field to a first value, for example, the first value is "MT-SDT". In this case, the first access network device adds indication information to the fifth information based on the "resume cause" field. For example, the indication information may be an SDT indicator (indicator), and the SDT indicator may include (or indicate) the information related to downlink small data transmission. For example, the SDT indicator may dedicatedly indicate downlink small data transmission, for example, the SDT indicator is an MT-SDT indicator. Alternatively, the SDT indicator may indicate uplink small data transmission, and in this embodiment of this application, indication information indicating uplink small data transmission is used, so that the SDT indicator may also indicate downlink small data transmission. Alternatively, the SDT indicator indicates small data transmission, and does not specifically indicate whether transmission is an uplink transmission or a downlink transmission, and for the second access network device, the second access network device only needs to determine that the UE requests small data transmission.

Alternatively, if a value of the cause information included in the RRC request message received by the first access network device in S 1103 is a second value, and for example, the second value indicates downlink transmission, but does not indicate downlink small data transmission, for example, the second value is "MT-access", the first access network device may not add the cause information to the fifth information. In this case, if determining, according to S1104, that the UE requests downlink small data transmission, the first access network device may add corresponding indication information to the fifth information. For example, the corresponding indication information may be an SDT indicator, and the SDT indicator may dedicatedly indicate downlink small data transmission, for example, the SDT indicator is an MT-SDT indicator. Alternatively, the SDT indicator may indicate uplink small data transmission, and in this embodiment of this application, indication information indicating uplink small data transmission is used, so that the SDT indicator may also indicate downlink small data transmission. Alternatively, the SDT indicator indicates small data transmission, and does not specifically indicate whether transmission is an uplink transmission or a downlink transmission, and for the second access network device, the second access network device only needs to determine that the UE requests small data transmission.

Optionally, the fifth information may be included in an Xn interface message. For example, the Xn interface message is a retrieve UE context request, or may be another Xn interface message.

S1106: The second access network device sends a full context of the UE to the first access network device. Correspondingly, the second access network device receives the full context of the UE from the first access network device. Alternatively, the second access network device sends a partial context of the UE to the first access network device. Correspondingly, the second access network device receives the partial context of the UE from the first access network device.

For example, after receiving the fifth information, the second access network device may learn, based on the fifth information, that the UE has currently initiated downlink small data transmission. Optionally, when determining whether to perform anchor relocation, the second access network device may use the fifth information as a reference. If the second access network device determines, based on the fifth information, not to perform anchor relocation, the second access network device may send the partial context of the UE to the first access network device.

For example, if the fifth information is included in the retrieve UE context request, the second access network device needs to send the context of the UE to the first access network device. Alternatively, even if the fifth information is not included in the retrieve UE context request, the first access network device may send the retrieve UE context request to the second access network device, and the second access network device also needs to send the context of the UE to the first access network device. The partial context of the UE includes, for example, an RLC layer context of the UE.

Optionally, if the second access network device sends the full context of the UE to the first access network device, the full context of the UE may be included in an Xn interface message, and the Xn interface message is, for example, a retrieve UE context response or a retrieve UE context failure. Alternatively, if the second access network device sends the partial context of the UE to the first access network device, the partial context of the UE may be included in an Xn interface message, and the Xn interface message is, for example, a retrieve UE context response or a retrieve UE context failure.

Whether the second access network device sends the full context or the partial context of the UE to the first access network device may be determined by the second access network device. Reference factors for implementing the decision by the second access network device are not limited in embodiments of this application. Optionally, for example, one of the reference factors is the fifth information, that is, when making a decision, the second access network device may consider a purpose of requesting to resume an RRC connection by the UE. For example, if the UE requests small data transmission (for example, downlink small data transmission), the second access network device may prefer not to perform anchor relocation, that is, send only the partial context of the UE to the first access network device, to reduce signaling overheads. However, if the UE does not request small data transmission, for example, the UE requests to enter an RRC connected state, the second access network device may prefer to perform anchor relocation, that is, send the full context of the UE to the first access network device. In this way, the first access network device communicates with the UE frequently. This simplifies a process in which the first access network device requests the context of the UE from the second access network device, and reduces signaling overheads. Certainly, the foregoing is merely examples. The second access network device may make another decision. For example, even if the UE requests small data transmission, the second access network device may decide to perform anchor relocation, or even if the UE does not request small data transmission, the second access network device may also decide not to perform anchor relocation. A specific decision is not limited.

In this embodiment of this application, when determining whether to perform anchor relocation, the second access network device may use the fifth information as a reference factor. In this way, the second access network device can make a more reasonable decision, and transmission overheads are reduced.

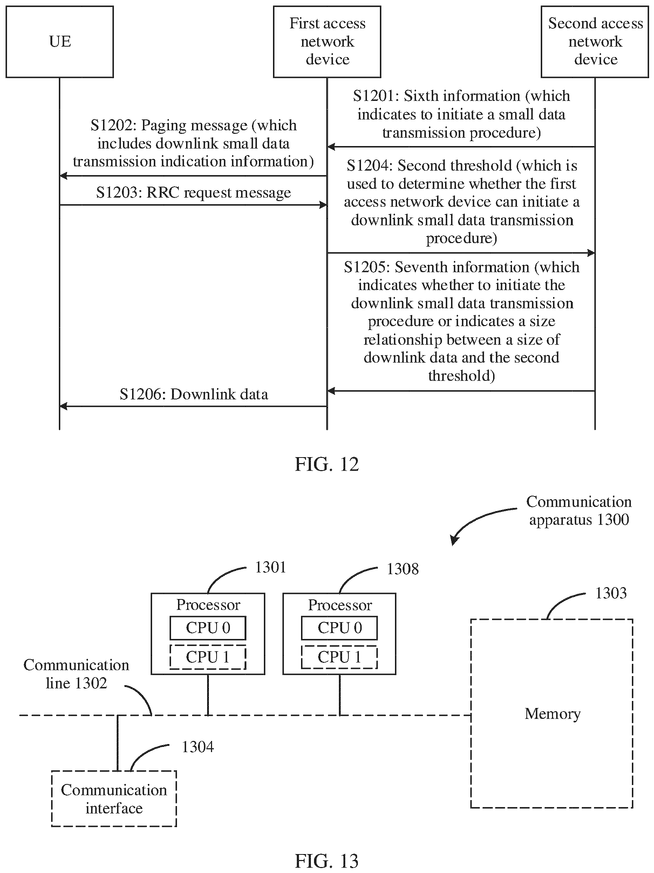

The following embodiment of this application further provides a communication method. According to the method, an anchor access network device can also learn of a purpose of requesting to obtain a context of UE by an access network device on which the UE currently camps, so that the anchor access network device can make a more reasonable decision. For example, FIG. 12 is a flowchart of the method. For implementation of network elements in the method in a network architecture, refer to descriptions of the embodiment shown in FIG. 11.

S1201: A second access network device sends sixth information to a first access network device. Correspondingly, the first access network device receives the sixth information from the second access network device.

The sixth information may indicate whether to initiate a downlink small data transmission procedure. For example, if the sixth information includes an MT-SDT indicator, the MT-SDT indicator may indicate to initiate the downlink small data transmission procedure. If the sixth information does not include the MT-SDT indicator, the sixth information may indicate not to initiate the downlink small data transmission procedure. In FIG. 12, an example in which the sixth information indicates to initiate the downlink small data transmission procedure is used.

Optionally, the sixth information may be sent based on paging of an Xn interface. For example, the second access network device sends the paging to an access network device that is located in a same RNA as the second access network device, to send the sixth information. In this case, the first access network device is one of access network devices that receive the sixth information. For example, a CU (or a CU-CP) of the second access network device sends the sixth information to a CU (for example, a CU-CP) of the first access network device.

Any one of embodiments shown in FIG. 7 to FIG. 9 may be applied in combination with the embodiment shown in FIG. 12. For example, S1201 and S805 in the embodiment shown in FIG. 8 may be a same step, or S1201 and S904 in the embodiment shown in FIG. 9 may be a same step. Alternatively, the embodiment shown in FIG. 12 may not be combined with the foregoing embodiments, but may be applied independently.

S 1202: The first access network device sends paging, to page UE. A receive end of the paging is one or more UEs.

Optionally, the paging may include downlink small data transmission indication information. For the downlink small data transmission indication information, refer to descriptions in the foregoing embodiments. For example, a DU of the first access network device sends the paging.

S1203: The UE sends an RRC request message to the first access network device. Correspondingly, the first access network device receives the RRC request message from the UE. For example, the UE sends the RRC request message to the DU of the first access network device, and the DU may forward the RRC request message to a CU of the first access network device, or forward the RRC request message to a CU-CP. Optionally, the RRC request message is, for example, an RRC resume request.

After receiving the paging, the UE may learn, based on the downlink small data transmission indication information, that downlink small data needs to be received currently. If the UE determines to receive the downlink small data, the UE may initiate an RRC connection resume process, where the RRC connection resume process is used for downlink small data transmission. The UE initiates the RRC connection resume process. For example, in an implementation, the UE sends the RRC request message to the first access network device. Therefore, it may be considered that the RRC request message is used by the UE to request downlink small data transmission, is used by the UE to initiate downlink small data transmission, is used by the UE to initiate small data transmission, is used by the UE to request small data, or is used by the UE to request downlink small data.

S1204: The first access network device sends fifth information to the second access network device. Correspondingly, the second access network device receives the fifth information from the first access network device. For example, the CU of the first access network device sends the fifth information to a CU of the second access network device, or the CU-CP of the first access network device sends the fifth information to a CU-CP of the second access network device.

The fifth information may include (or indicate) information related to downlink small data transmission. For example, the information related to the downlink small data transmission includes a second threshold, and the second threshold may be used by the second access network device to determine whether the first access network device can initiate (or execute) a downlink small data transmission procedure. For example, the second threshold may indicate a threshold of a size of a data packet in small data transmission supported by the first access network device. For different access network devices, thresholds used for determining whether a downlink small data transmission procedure can be performed may be the same or different. The thresholds are related to factors such as a capability of an access network device. For example, for the second access network device, a reference threshold is a first threshold (for this, refer to descriptions of the foregoing embodiments), and for the first access network device, a reference threshold is the second threshold. Therefore, although the second access network device indicates the first access network device to initiate the downlink small data transmission procedure, the first access network device cannot determine whether the first access network device is capable of initiating the downlink small data transmission procedure because the first access network device does not obtain information such as a size of downlink data. Therefore, the first access network device may send the second threshold to the second access network device, so that the second access network device determines, based on the second threshold, whether the first access network device can initiate the downlink small data transmission procedure.

Optionally, the second threshold may be set by the first access network device. For example, if the first access network device further includes a CU and a DU, the first access network device may be set by the CU, or may be set by the DU. Because the CU is responsible for interacting with the second access network device, if the second threshold is set by the DU, the DU may send the set second threshold to the CU. For example, the DU may send the second threshold to the CU based on an F1 interface message (for example, referred to as a first F1 interface message). However, if the second threshold is set by the CU, the CU may send the second threshold to the DU. For example, the CU may send the second threshold to the DU based on an F1 interface message (for example, referred to as a second F1 interface message). Alternatively, the second threshold may be sent to the DU based on a message such as F1 paging, or the CU may not send the second threshold to the DU. The first F1 interface message or the second F1 interface message may be a message related to the UE, or may be a message irrelevant to the UE. For example, the first F1 interface message or the second F1 interface message is an F1 setup request (F1 setup request), a gNB DU configuration update (gNB DU configuration update), a gNB CU configuration update (gNB CU configuration update), a UE context request (UE context request), a UE context modification request (UE context modification request), CU-CU radio information transfer (CU-DU radio information transfer), or the like.

Alternatively, if the CU of the first access network device further includes a CU-CP and a CU-UP, the first access network device includes the CU-UP, the CU-CP, and the DU. In this case, the second threshold may be set by the CU-CP, may be set by the CU-UP, or may be set by the DU. Because the CU-CP may be responsible for interacting with the second access network device, if the second threshold is set by the DU, the DU may send the second threshold to the CU-CP. Optionally, the DU may also send the second threshold to the CU-UP. Alternatively, if the second threshold is set by the CU-UP, the CU-UP may send the second threshold to the CU-CP. Optionally, the CU-UP may also send the second threshold to the DU. Alternatively, if the second threshold is set by the CU-CP, the CU-CP may send the second threshold to the DU and/or the CU-UP, or may not send the second threshold to the DU and the CU-UP.

That a network element in the first access network device sets the second threshold may include: The network element may actively set the second threshold, or another network element may request the network element to set the second threshold. For example, that the CU of the first access network device sets the second threshold may include: The CU may actively set the second threshold, or the DU may request the CU to set the second threshold.

Alternatively, optionally, the first access network device may not need to configure the second threshold. For example, if a third access network device configures the second threshold, and sends the second threshold to the first access network device, the first access network device obtains the second threshold. The third access network device and the second access network device may be a same access network device, or may be different access network devices.

Alternatively, optionally, the second threshold may be preconfigured in the first access network device. In other words, a manner in which the first access network device obtains the second threshold is not limited in embodiments of this application.

In addition, for the first access network device, the second threshold may always remain unchanged, that is, an originally obtained second threshold is always used. Alternatively, the first access network device may adjust the second threshold. For example, the first access network device may adjust the second threshold based on a factor such as a data volume of downlink small data transmission and/or a load of the first access network device, so that the second threshold is more suitable for a current network situation.

Optionally, the fifth information may be included in an Xn interface message. For example, the Xn interface message is a retrieve UE context request or another Xn interface message.

S 1205: The second access network device sends seventh information to the first access network device. Correspondingly, the first access network device receives the seventh information from the second access network device. For example, a CU of the second access network device sends the seventh information to the CU of the first access network device, or a CU-CP of the second access network device sends the seventh information to the CU-CP of the first access network device.

The second access network device learns of a size of to-be-sent downlink data. After receiving the second threshold, the second access network device may determine a size relationship between the second threshold and the size of the downlink data. If the size of the downlink data is less than or equal to the second threshold, the first access network device can initiate a downlink small data transmission procedure to transmit the downlink data. However, if the size of the downlink data is greater than the second threshold, the first access network device cannot initiate the downlink small data transmission procedure to transmit the downlink data. For example, in this case, the first access network device needs to transfer the UE to an RRC connected state before sending the downlink data to the UE.

After determining whether the first access network device can initiate the downlink small data transmission procedure, the second access network device may send the seventh information to the first access network device. For example, the seventh information indicates to initiate the downlink small data transmission procedure or not to initiate the downlink small data transmission procedure. This direct indicating manner is clear. Alternatively, the seventh information may indicate the size relationship between the size of the to-be-sent downlink data and the second threshold. For example, the seventh information indicates that the size of the downlink data is less than or equal to the second threshold, or indicates that the size of the downlink data is greater than the second threshold. For example, when the seventh information indicates that the size of the downlink data is less than or equal to the second threshold, the first access network device may perform the downlink small data transmission procedure. When the seventh information indicates that the size of the downlink data is greater than the second threshold, the first access network device cannot perform the downlink small data transmission procedure.

For example, the seventh information occupies one bit (bit). For example, the seventh information is of an enumeration type. If a value of the seventh information is true (true), it indicates that the size of the downlink data is less than or equal to the second threshold, or indicates to initiate the downlink small data transmission procedure. If the value of the seventh information is false (false), it indicates that the size of the downlink data is greater than the second threshold, or indicates not to initiate the downlink small data transmission procedure. Alternatively, if the value of the seventh information is false, it indicates that the size of the downlink data is less than or equal to the second threshold, or indicates to initiate the downlink small data transmission procedure. If the value of the seventh information is true, it indicates that the size of the downlink data is greater than the second threshold, or indicates not to initiate the downlink small data transmission procedure.

Alternatively, if the second access network device sends the seventh information to the first access network device, it indicates that the size of the downlink data is less than or equal to the second threshold, or indicates to initiate the downlink small data transmission procedure. If the second access network device does not send the seventh information to the first access network device, it indicates that the size of the downlink data is greater than the second threshold, or indicates not to initiate the downlink small data transmission procedure.

Alternatively, the seventh information may be implemented in an implicit manner. For example, the second access network device further sends a context of the UE to the first access network device. If the second access network device sends a partial context of the UE to the first access network device, it implicitly indicates that the size of the downlink data is less than or equal to the second threshold, or indicates to initiate the downlink small data transmission procedure. However, if the second access network device sends the full context of the UE to the first access network device, it implicitly indicates that the size of the downlink data is greater than the second threshold, or indicates not to initiate the downlink small data transmission procedure. In this case, the context of the UE may be considered as the seventh information.

Optionally, if the second access network device sends the full context of the UE to the first access network device, the full context of the UE may be included in an Xn interface message, and the Xn interface message is, for example, a retrieve UE context response or a retrieve UE context failure. Alternatively, if the second access network device sends the partial context of the UE to the first access network device, the full context of the UE may be included in an Xn interface message, and the Xn interface message is, for example, a retrieve UE context response or a retrieve UE context failure. In addition, if the second access network device needs to send the context of the UE and the seventh information to the first access network device, the seventh information and the context of the UE may be included in one message, or may be included in different messages.

S1206: The first access network device sends the downlink data to the UE. Correspondingly, the UE receives the downlink data from the first access network device.

If the second access network device determines to perform anchor relocation, the first access network device needs to perform anchor relocation with the second access network device. After anchor relocation is performed, the second access network device may send the received downlink data to the first access network device, so that the first access network device sends the downlink data to the UE. If a core network device still has downlink small data to be sent to the UE, because anchor relocation has been performed, the core network device sends new downlink data to the first access network device, and the first access network device may send the new downlink data to the UE.

Alternatively, if the second access network device determines not to perform anchor relocation, the second access network device may send, to the first access network device, the downlink data to be sent to the UE, and the first access network device sends the downlink data to the UE. If the core network device still has downlink small data to be sent to the UE, because anchor relocation is not performed, the core network device sends new downlink data to the second access network device, the second access network device forwards the new downlink data to the first access network device, and the first access network device then sends the new downlink data to the UE.

If the seventh information indicates to initiate downlink small data transmission, or indicates that the size of the downlink data is less than or equal to the second threshold, the first access network device may initiate the downlink small data transmission procedure. In this case, the downlink data sent by the first access network device to the UE is downlink small data. However, if the seventh information indicates not to initiate downlink small data transmission, or indicates that the size of the downlink data is greater than the second threshold, the first access network device does not initiate the downlink small data transmission procedure. For example, the first access network device sends an RRC response message such as an RRC resume message to the UE, so that the UE enters an RRC connected state, and then the first access network device sends the downlink data to the UE.

In this embodiment of this application, when determining whether to perform anchor relocation, the second access network device may use the fifth information as a reference factor. In this way, the second access network device can make a more reasonable decision, and transmission overheads are reduced.

For example, FIG. 13 is a diagram of a structure of a communication apparatus according to an embodiment of this application. The communication apparatus 1300 may be the CU or a circuit system of the CU in any one of the embodiment shown in FIG. 7 to the embodiment shown in FIG. 9, and is configured to implement the method corresponding to the CU in the foregoing method embodiments. Alternatively, the communication apparatus 1300 may be the DU or a circuit system of the DU in any one of the embodiment shown in FIG. 7 to the embodiment shown in FIG. 9, and is configured to implement the method corresponding to the DU in the foregoing method embodiments. Alternatively, the communication apparatus 1300 may be the CU-UP or a circuit system of the CU-UP in any one of the embodiment shown in FIG. 7 to the embodiment shown in FIG. 9, and is configured to implement the method corresponding to the CU-UP in the foregoing method embodiments. Alternatively, the communication apparatus 1300 may be the CU-CP or a circuit system of the CU-CP in any one of the embodiment shown in FIG. 7 to the embodiment shown in FIG. 9, and is configured to implement the method corresponding to the CU-CP in the foregoing method embodiments. Alternatively, the communication apparatus 1300 may be the first access network device or a circuit system of the first access network device in any one of the embodiment shown in FIG. 11 and the embodiment shown in FIG. 12, and is configured to implement the method corresponding to the first access network device in the foregoing method embodiments. Alternatively, the communication apparatus 1300 may be the second access network device or a circuit system of the second access network device in any one of the embodiment shown in FIG. 11 and the embodiment shown in FIG. 12, and is configured to implement the method corresponding to the second access network device in the foregoing method embodiments. Alternatively, the communication apparatus 1300 may be the UE or a circuit system of the UE in any one of the embodiment shown in FIG. 11 to the embodiment shown in FIG. 12, and is configured to implement the method corresponding to the UE in the foregoing method embodiments. For a specific function, refer to descriptions in the foregoing method embodiments. For example, the circuit system is a chip system.

The communication apparatus 1300 includes at least one processor 1301. The processor 1301 may be configured to perform internal processing of the apparatus, to implement a specific control processing function. Optionally, the processor 1301 includes instructions. Optionally, the processor 1301 may store data. Optionally, different processors may be independent components, may be located in different physical locations, or may be located on different integrated circuits. Optionally, different processors may be integrated into one or more processors, for example, integrated into one or more integrated circuits.

Optionally, the communication apparatus 1300 includes one or more memories 1303 that is/are configured to store the instructions. Optionally, the memory 1303 may further store the data. The processor and the memory may be separately disposed, or may be integrated together.

Optionally, the communication apparatus 1300 includes a communication line 1302 and at least one communication interface 1304. The memory 1303, the communication line 1302, and the communication interface 1304 are all optional items. Therefore, the memory 1303, the communication line 1302, and the communication interface 1304 are all represented by dashed lines in FIG. 13.

Optionally, the communication apparatus 1300 may further include a transceiver and/or an antenna. The transceiver may be configured to send information to or receive information from another apparatus. The transceiver may be referred to as a transceiver device, a transceiver circuit, an input/output interface, or the like, and is configured to implement a transceiver function of the communication apparatus 1300 by using the antenna. Optionally, the transceiver includes a transmitter (transmitter) and a receiver (receiver). For example, the transmitter may be configured to generate a radio frequency (radio frequency) signal by using a baseband signal, and the receiver may be configured to convert a radio frequency signal into a baseband signal.

The processor 1301 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 1302 may include a path for transmitting information between the foregoing components.

The communication interface 1304 is any apparatus like a transceiver, and is configured to communicate with another device or a communication network such as the Ethernet, a radio access network (radio access network, RAN), a wireless local area network (wireless local area network, WLAN), or a wired access network.

The memory 1303 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, and the like), a magnetic disk storage medium or another magnetic storage device, or any other medium that can carry or store expected program code in a form of an instruction or a data structure and that can be accessed by a computer, but is not limited thereto. The memory 1303 may exist independently, and is connected to the processor 1301 through the communication line 1302. Alternatively, the memory 1303 may be integrated with the processor 1301.

The memory 1303 is configured to store computer-executable instructions for performing the solutions of this application, and the processor 1301 controls execution of the computer-executable instructions. The processor 1301 is configured to execute the computer-executable instructions stored in the memory 1303, to implement communication methods provided in embodiments of this application.

Optionally, the computer-executable instructions in embodiments of this application may also be referred to as application program code. This is not specifically limited in embodiments of this application.

During specific implementation, in an embodiment, the processor 1301 may include one or more CPUs such as a CPU 0 and a CPU 1 in FIG. 13.

During specific implementation, in an embodiment, the communication apparatus 1300 may include a plurality of processors, for example, the processor 1301 and a processor 1308 in FIG. 13. Each of the processors may be a single-core (single-CPU) processor, or may be a multicore (multi-CPU) processor. The processors herein may be one or more devices, circuits, and/or processing cores configured to process data (for example, computer program instructions).

When the apparatus shown in FIG. 13 is a chip, for example, a chip of a first access network device, a chip of a second access network device, a chip of a first network element, or a chip of a terminal device, the chip includes the processor 1301 (the chip may further include the processor 1308), the communication line 1302, the memory 1303, and the communication interface 1304. Specifically, the communication interface 1304 may be an input interface, a pin, a circuit, or the like. The memory 1303 may be a register, a buffer, or the like. The processor 1301 and the processor 1308 each may be a general-purpose CPU, a microprocessor, an ASIC, or one or more integrated circuits configured to control program execution of a communication method in any one of the foregoing embodiments.

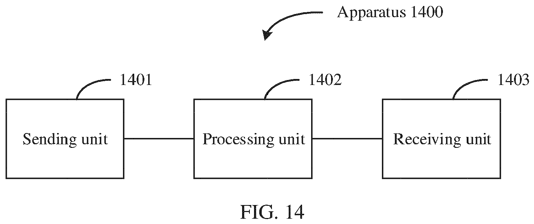

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely a logical function division. During actual implementation, another division manner may be used. For example, when each functional module is obtained through division based on each corresponding function, FIG. 14 is a diagram of an apparatus. The apparatus 1400 may be the CU, the DU, the CU-UP, the CU-CP, the first access network device, the second access network device, or the UE in the foregoing method embodiments. Alternatively, the apparatus 1400 may be a chip in the CU, a chip in the DU, a chip in the CU-CP, a chip in the CU-UP, a chip in the first access network device, a chip in the second access network device, or a chip in the UE. The apparatus 1400 includes a sending unit 1401, a processing unit 1402, and a receiving unit 1403.

It should be understood that the apparatus 1400 may be configured to implement steps performed by the CU, the DU, the CU-UP, the CU-CP, the first access network device, the second access network device, or the UE in methods in embodiments of this application. For related features, refer to the foregoing embodiments. Details are not described herein again.

Optionally, functions/implementation processes of the sending unit 1401, the receiving unit 1403, and the processing unit 1402 in FIG. 14 may be implemented by the processor 1301 in FIG. 13 by invoking the computer-executable instructions stored in the memory 1303. Alternatively, a function/implementation process of the processing unit 1402 in FIG. 14 may be implemented by the processor 1301 in FIG. 13 by invoking the computer-executable instructions stored in the memory 1303, and functions/implementation processes of the sending unit 1401 and the receiving unit 1403 in FIG. 14 may be implemented by using the communication interface 1304 in FIG. 13.

Optionally, when the apparatus 1400 is a chip or a circuit, functions/implementation processes of the sending unit 1401 and the receiving unit 1403 may alternatively be implemented by using a pin, a circuit, or the like.

This application further provides a computer-readable storage medium. The computer-readable storage medium stores a computer program or instructions. When the computer program or the instructions is/are run, the method performed by the access network device or the terminal device in the foregoing method embodiments is implemented. In this way, the functions in the foregoing embodiments may be implemented in a form of a software functional unit and sold or used as an independent product. Based on such an understanding, the technical solutions of this application essentially, the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a ROM, a RAM, a magnetic disk, or an optical disc.

This application further provides a computer program product. The computer program product includes computer program code. When the computer program code runs on a computer, the computer is enabled to perform the method performed by the CU, the DU, the CU-UP, the CU-CP, the first access network device, the second access network device, or the UE in any one of the foregoing method embodiments.

This application further provides a first communication system that includes the first network element and the second network element in any one of embodiments shown in FIG. 7 to FIG. 9. The first network element is, for example, a DU, and the second network element is a CU. Alternatively, the first network element is a DU, and the second network element is a CU-CP or a CU-UP. Alternatively, the first network element is a CU-CP, and the second network element is a CU-UP. If the first network element is a DU, and the second network element is a CU-CP, optionally, the first communication system may further include a CU-UP. If the first network element is a DU, and the second network element is a CU-UP, optionally, the first communication system may further include a CU-CP. If the first network element is a CU-CP, and the second network element is a CU-UP, optionally, the first communication system may further include a DU. For example, the first communication system may be implemented by using an access network device, and a network element included in the first communication system is, for example, a functional unit included in the access network device.

This application further provides a second communication system that includes the first access network device and the second access network device in any one of embodiments shown in FIG. 11 and FIG. 12. Optionally, the system further includes the UE in any one of embodiments shown in FIG. 11 and FIG. 12.

An embodiment of this application further provides a processing apparatus that includes a processor and an interface. The processor is configured to perform the method performed by the first network element, the first access network device, the second access network device, or the UE in any one of the foregoing method embodiments.

All or some of the foregoing embodiments may be implemented by using software, hardware, firmware, or any combination thereof. When software is used to implement embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Various illustrative logic units and circuits described in embodiments of this application may implement or operate the described functions by using a general-purpose processor, a digital signal processor (digital signal processor, DSP), an application-specific integrated circuit (application specific integrated circuit, ASIC), a field programmable gate array (field programmable gate array, FPGA) or another programmable logic apparatus, a discrete gate or transistor logic, a discrete hardware component, or any combination thereof. The general-purpose processor may be a microprocessor. Optionally, the general-purpose processor may also be any conventional processor, controller, microcontroller, or state machine. The processor may alternatively be implemented by a combination of computing apparatuses, such as a digital signal processor and a microprocessor, a plurality of microprocessors, one or more microprocessors in combination with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable disk, a CD-ROM, or a storage medium in any other format in this field. For example, the storage medium may be connected to a processor, so that the processor may read information from the storage medium and write information into the storage medium. Alternatively, the storage medium may be integrated into a processor. The processor and the storage media may be disposed in an ASIC, and the ASIC may be disposed in a terminal device. Optionally, the processor and the storage medium may alternatively be disposed in different components in the terminal device.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although embodiments of this application are described with reference to specific features and embodiments thereof, it is clear that various modifications and combinations may be made to embodiments of this application without departing from the scope of embodiments of this application. Correspondingly, embodiments of this application and the accompanying drawings are merely example descriptions of embodiments of this application that are defined by the appended claims, and are considered to cover any or all of modifications, variations, combinations, or equivalents in the scope of embodiments of this application. Apparently, persons skilled in the art may make various modifications and variations to embodiments of this application without departing from the scope of embodiments of this application. Therefore, provided that the modifications and variations in embodiments of this application fall within the scope of the claims of this application and their equivalent technologies, embodiments of this application are also intended to include the modifications and variations.

## Claims

1. A communication method, wherein the method comprises:
receiving, by a first network element, first information from a second network element, wherein the first information comprises information about downlink data, and the downlink data is from a core network device; and the first network element is a first distributed unit DU, and the second network element is a first central unit CU; or the first network element is a first CU-control plane CP, and the second network element is a first CU-user plane UP; and
if the downlink data meets a downlink small data transmission condition, sending, by the first network element, a paging message, wherein the paging message indicates a terminal device to initiate a downlink small data transmission procedure.

2. The method according to claim 1, wherein the first network element is the first DU, the first DU receives the first information from a first CU-control plane CP, and the first CU-CP receives fourth information from a first CU-user plane UP, wherein the fourth information comprises the information about the downlink data, and the downlink data is from the core network device.

3. The method according to claim 1 or 2, the first information comprises one or more of the following:
a size of the downlink data;
a size relationship between a size of the downlink data and a first threshold; or
capability information of a terminal device configured to receive the downlink data, wherein the capability information indicates whether the terminal device supports downlink small data transmission.

4. The method according to claim 3, wherein if the first information comprises the size of the downlink data, the first information indicates that the terminal device supports downlink small data transmission.

5. The method according to claim 3, wherein if the first information does not comprise the capability information, the method further comprises:
receiving, by the first network element, the capability information.

6. The method according to any one of claims 1 to 5, wherein the method further comprises:
if the size of the downlink data is less than or equal to the first threshold, determining, by the first network element, that the downlink data meets the downlink small data transmission condition, wherein the information about the downlink data comprises the size of the downlink data; or
if the information about the downlink data indicates that the size of the downlink data is less than or equal to the first threshold, determining, by the first network element, that the downlink data meets the downlink small data transmission condition, wherein the information about the downlink data indicates the size relationship between the size of the downlink data and the first threshold.

7. The method according to claim 6, wherein the information about the downlink data comprises the size of the downlink data, and if the size of the downlink data is less than or equal to the first threshold, the determining, by the first network element, that the downlink data meets the downlink small data transmission condition comprises:
if the size of the downlink data is less than or equal to the first threshold, and the terminal device supports downlink small data transmission, determining, by the first network element, that the downlink data meets the downlink small data transmission condition.

8. The method according to claim 6, wherein the information about the downlink data indicates the size relationship between the size of the downlink data and the first threshold, and if the information about the downlink data indicates that the size of the downlink data is less than or equal to the first threshold, the determining, by the first network element, that the downlink data meets the downlink small data transmission condition comprises:
if the information about the downlink data indicates that the size of the downlink data is less than or equal to the first threshold, and the terminal device supports downlink small data transmission, determining, by the first network element, that the downlink data meets the downlink small data transmission condition.

9. The method according to any one of claims 1 to 8, wherein the paging message comprises downlink small data transmission indication information.

10. The method according to any one of claims 1 to 9, wherein the method further comprises:
sending, by the first network element, second information to a third network element, wherein the second information indicates that the third network element needs to reply, to the first network element, a response to the paging message, and the third network element is one of network elements that receive the paging message; and
receiving, by the first network element, third information from the third network element, wherein the third information indicates to determine to initiate the downlink small data transmission procedure, and the third information is the response to the paging message.

11. The method according to any one of claims 1 to 10, wherein the first network element is a first CU, and the method further comprises:
sending, by the first network element, the first information to a second CU, wherein the first CU is an anchor network element of the terminal device, and the second CU is a network element on which the terminal device currently camps.

12. A communication system, comprising a first network element and a second network element, wherein
the second network element is configured to send first information to the first network element, wherein the first information comprises information about downlink data, and the downlink data is from a core network device; and the first network element is a first DU, and the second network element is a first CU; or the first network element is a first CU-control plane CP, and the second network element is a first CU-user plane UP;
the first network element is configured to receive the first information from the second network element; and
the first network element is further configured to send a paging message if the downlink data meets a downlink small data transmission condition, wherein the paging message indicates a terminal device to initiate a downlink small data transmission procedure.

13. The communication system according to claim 12, wherein the first network element is the first DU, the communication system further comprises a first CU-control plane CP, and the first CU-CP is configured to:
receive fourth information from a first CU-user plane UP, wherein the fourth information comprises the information about the downlink data, and the downlink data is from the core network device; and
send the first information to the first DU.

14. The communication system according to claim 13, wherein if the first information comprises a size of the downlink data, the first information indicates that the terminal device supports downlink small data transmission.

15. The communication system according to claim 13, wherein if the first information does not comprise capability information, the first network element is further configured to receive the capability information.

16. The communication system according to claim 13, wherein the information about the downlink data indicates a size relationship between a size of the downlink data and a first threshold, and that the first network element is configured to: if the information about the downlink data indicates that the size of the downlink data is less than or equal to the first threshold, determine that the downlink data meets the downlink small data transmission condition specifically comprises:
if the information about the downlink data indicates that the size of the downlink data is less than or equal to the first threshold, and the terminal device supports downlink small data transmission, determining that the downlink data meets the downlink small data transmission condition.

17. The communication system according to any one of claims 12 to 16, wherein the first network element is further configured to:
send second information to a third network element, wherein the second information indicates that the third network element needs to reply, to the first network element, a response to the paging message, and the third network element is one of network elements that receive the paging message; and
receive third information from the third network element, wherein the third information indicates to determine to initiate the downlink small data transmission procedure, and the third information is the response to the paging message.

18. The communication system according to any one of claims 12 to 17, wherein the first network element is a first CU, the first network element is further configured to send the first information to a second CU, the first CU is an anchor network element of the terminal device, and the second CU is a network element on which the terminal device currently camps.

19. A computer-readable storage medium, wherein the computer-readable storage medium is configured to store a computer program, and when the computer program runs on a computer, the computer is enabled to perform the method according to any one of claims 1 to 11.

20. A chip, comprising a communication interface and one or more processors, wherein the one or more processors are configured to read instructions, to perform the method according to any one of claims 1 to 11.
